# EUROPEAN PATENT SPECIFICATION

(11) **EP 2 667 226 B1**
(45) Date of publication and mention of the grant of the patent: **04.03.2015**
(21) Application number: 12736923.9
(22) Date of filing: 12.01.2012
(51) Int. Cl.: G02B 5/08, B32B 7/02, B32B 9/00, F24J 2/10, G02B 1/10

(54) **FILM MIRROR AND REFLECTING APPARATUS FOR SOLAR POWER GENERATION**
FILMSPIEGEL UND REFLEXIONSVORRICHTUNG FÜR EINE SONNENENERGIEERZEUGUNGSANLAGE
MIROIR À FILM ET APPAREIL RÉFLÉCHISSANT POUR LA PRODUCTION D'ÉNERGIE SOLAIRE

(30) Priority: 19.01.2011 JP 2011008351
(43) Date of publication of application: 27.11.2013
(73) Proprietor: Konica Minolta, Inc., Tokyo 100-7015 (JP)
(72) Inventor: KUMAGAI, Takenori, Tokyo 100-7015 (JP)
(74) Representative: Gille Hrabal
(86) International application number: PCT/JP2012/050418
(87) International publication number: WO 2012/098971

(56) References cited:
- WO-A1-2010/106844
- WO-A1-2011/125949
- JP-A- 5 249 306
- JP-A- 11 286 784
- JP-A- 2002 078 821
- JP-A- 2007 038 626
- JP-A- 2009 088 388
- JP-A- 2010 280 147

## Description

### TECHNICAL FIELD

The present invention relates to a film mirror and to a reflecting apparatus (device) for solar (thermal) power generation which uses the film mirror.

### BACKGROUND ART

In recent years, as alternative energy to fossil fuel energy such as petroleum and natural gas, natural energy has been studied to be used. Solar energy, which is the most stable as the alternative energy to the fossil fuel and has the largest energy amount in the natural energy, has received attention. However, though the solar energy is extremely prepotent alternative energy, it is conceived that the following are regarded as problems from a viewpoint of fully exploiting the solar energy: (1) that an energy density of the solar energy is low; and (2) it is difficult to store and transport the solar energy.

Nowadays, research/development of a solar cell as a technology for utilizing the solar energy are flourishingly carried out, and utilization efficiency of the sunlight is also increased; however, it is actual circumstances that the efficiency concerned does not reach sufficient recovery efficiency yet.

As another method for converting the sunlight into energy, solar thermal power generation by which power is generated from heat, as a medium, obtained by condensing the sunlight by a reflecting mirror receives attention. If this method is used, then it is possible to generate power at any time of day and night, and in addition, it is believed that higher power generation efficiency than in the solar cell is obtained in a long term perspective, and accordingly, it is believed that the sunlight can be utilized effectively.

For this reflecting mirror for solar thermal power generation, a mirror using glass as a base material is used; however, such a glass-made mirror has problems that a mass thereof is large, that a volume thereof is large, that it costs for transportation thereof, that installation thereof is difficult, that the mirror concerned is prone to be broken, and so on. In this connection, if a mirror using resin as an alternative to the glass is used, then weight saving of the mirror can be achieved, and in addition, such a problem as the breakage does not occur, either. Accordingly, a film mirror in which a reflecting layer is formed on a resin-made film base material receives attention, e.g. as disclosed in publication WO 2010/106844 A1.

In the case of using the film mirror outdoors, problems different from those in the glass-made mirror are revealed. For example, in the glass-made mirror, the glass on a front surface thereof is hardly deteriorated by water vapor and ultraviolet rays, which are present in the atmosphere. However, in the case of the film mirror, a front surface thereof is sealed with a thin resin layer, and accordingly, deteriorations of the film mirror by external factors, such as a deterioration of the resin layer by the ultraviolet rays, are regarded as problems. Note that a side view mirror of a vehicle is mentioned as the film mirror used outdoors nowadays, and an aluminum-evaporated layer is used for a reflecting layer in this case. Aluminum is metal less likely to be deteriorated in comparison with silver, and accordingly, a special protection layer that covers a front surface thereof is not required. However, since total light average reflectance thereof is 85% or less, the fact that a sharp reflected image cannot be obtained is mentioned as a problem.

In this connection, a film mirror, which has weatherability to avoid deterioration thereof even if the film mirror concerned is used outdoors for a long period and has high reflectance, is required to be developed.

Moreover, in most cases, a facility of the solar thermal power generation is constructed in a desert region. Therefore, dust is adhered onto the front surface of the mirror and the reflectance is lowered. The power generation efficiency is lowered in accordance with the lowering of the reflectance of the mirror, and thus dirt of the mirror is recognized as a large problem. In actual, in a plant of solar thermal power generation which is located in California, it was observed that the reflectance of the mirror fell down by as much as 20% or more after the elapse of one month. It is reported that decline in such mirror reflectance by 1% leads to a loss of $185,000/year. For now, the mirror is cleaned by spraying ion exchanged water on the mirror at a frequency of approximately once per two weeks to two months. If it is assumed that cost per cleaning is approximately $0.01/m², then an expense as huge as $1,000 to $20,000 is needed in the case of cleaning mirrors in the whole of the plant. Moreover, in addition to this, such mirrors are to be washed in a rubbing manner by a brush several times a year, and accordingly, surface hardness thereof is also required so that front surfaces thereof can be less likely to be scratched (refer to Non-Patent Literature 1).

That is to say, as a present subject of the film mirror for use in the solar thermal power generation, it is required that the front surface thereof be equipped with both functions of hard-coating properties and antifouling performance.

The inventors have investigated the dirt adhered onto the film mirror in the desert.

We have found out that, unlike usual dirt, the dirt in the desert forms a strong sand film. This is believed that because a large amount of sand falls and piles up on the front surface of the mirror and a dew condensation, caused by the fact that a temperature difference between morning and night is large, is adhered onto the front surface of the mirror. As a result, particles of the sand are coagulated in moisture and react with a pollutant in the atmosphere to generate insoluble salt, whereby a film of the sand is formed. From such a result as described above, it is understood that the moisture is largely concerned with the adhesion of the dirt.

In order to suppress the adhesion of the dirt caused by water on the front surface of the film mirror, there is conceived an antifouling method of making the front surface hydrophilic or repellent. If the front surface is hydrophilic, then the water is likely to be spread thereon, and it can be expected that such a self-cleaning function that the dirt adhered onto the front surface is washed away is exerted. Meanwhile, if the front surface is repellent, then water droplets adhered onto the front surface are repelled, and accordingly, such a condition where the water droplets roll down naturally can be achieved without applying the cleaning to the front surface, and therefore, a front surface onto which the dirt is less likely to be adhered from the beginning can be made. Note that, as indices for intensity of the repellency, there are: a contact angle that represents a tendency to repel the water; and a drop angle that represents a tendency to drop off the water. In the case where the adhesion of the dew condensation on the desert is desired to be prevented, it is necessary to lower the drop angle rather than increasing the contact angle.

From the above-described contents of the investigation, three functions, which are the hard coating properties (scratch resistance), the antifouling performance and the weatherability, are required for the surface layer of the film mirror for solar thermal power generation.

In Patent Literature 1, a film mirror for solar thermal power generation is reported; however, an acrylic layer with relatively low hardness is provided on an outermost layer thereof, and accordingly, the film mirror concerned is prone to be scratched and is prone to be soiled.

In Patent Literature 2, a transparent coating molded product is proposed, in which a hard coat layer having a hydrophilic group is provided between a transparent base material and an antifouling layer composed of a fluorine compound containing silicon; however, such a contrivance as to enhance the weatherability is not made.

In Patent Literature 3, a fine irregularity structure is formed on a substrate, whereby super-hydrophilicity is expressed. However, there is uncertainty that high weatherability can be obtained by this hydrophilic irregularity structure member.

### PRIOR ART LITERATURES

### PATENT LITERATURES

Patent Literature 1: Japanese Translation of PCT International Application Publication No. 2009-520174
Patent Literature 2: Japanese Patent Laid-Open Publication No. 2004-250474
Patent Literature 3: Japanese Patent Laid-Open Publication No. 2007-106966

### NON-PATENT LITERATURES

Non-Patent Literature 1: Final report on the operation and maintenance improvement program for concentrating solar power plants. Printed June 1999, Gilbert E. Cohen, David W. Kearney, Gregory J. Kolb

### SUMMARY OF THE INVENTION

### PROBLEMS TO BE SOLVED BY THE INVENTION

As described above, the film mirror for solar thermal power generation is lightweight and flexible, and has merits of being capable of area increase/mass production while suppressing manufacturing cost thereof. However, surface contamination by a cloud of sand is heavy, and when the film mirror is installed for a long period in an environment such as a desert where it hardly rains, regular reflectance of the mirror concerned is lowered in some case. In such a case, the dirt adhered onto the mirror is washed away by a brush and the like, whereby the regular reflectance is partially recovered. However, in some case, the front surface of the mirror is scratched by the washing and the regular reflectance is lowered than in an initial state.

It is an object of the present invention to provide a film mirror for solar thermal power generation, which is excellent in antifouling performance, and is excellent in weatherability and scratch resistance so that good regular reflectance can be maintained against the sunlight for a long period even if the film mirror is installed in a severe environment for a long period, and to provide a reflecting device for solar thermal power generation which uses the film mirror concerned.

### MEANS TO SOLVE THE PROBLEM

In order to realize the present invention, it is necessary to impart the antifouling performance, the weatherability and the hard coating properties to the outermost layer of the film mirror for solar thermal power generation. In order to develop these three performances, it is a most effective method to form an antifouling layer on a hard coat layer formed on a reflecting film.

In the present invention, inorganic fine particles having different particle diameters which are approximately several nanometers are dispersed, whereby an antifouling layer having a fine irregularity structure can be formed, and high antifouling performance derived from super repellency and super hydrophilicity can be developed. When properties of the inorganic fine particles are hydrophilic, then the super hydrophilicity is developed, and when the inorganic fine particles are used for repellent coating, then the super repellency is developed. The irregularity structure to be formed in the present invention can be formed as an extremely dense and strong film by coagulation force between the inorganic fine particles. Moreover, because the antifouling layer is composed of inorganic matter, high weatherability is obtained. Therefore, even when the reflecting device is used for a long period in such a severe environment as a desert, the antifouling performance and the hard coating properties can be maintained for a long period.

The above-described object of the present invention is achieved by the following configurations.

According to an embodiment of the present invention, there is provided a film mirror in which a reflecting layer is provided on/over a film base material. The film mirror is characterized in that it includes an antifouling layer which is provided on an outermost layer on a light incident side of the film mirror, and inorganic fine particles having different particle diameters are dispersed in the antifouling layer.

Preferably, the particle diameters of the inorganic fine particles contained in the antifouling layer range 0.5 nm or more to 100 nm or less.

Preferably, the antifouling layer includes an inorganic fine particle layer formed by dispersing the inorganic fine particles therein and a compound film that coats the inorganic fine particle layer. The compound film includes an organic fluorinated ether group or an organic fluorinated polyether group, and a compound having an alkoxysilyl group.

Preferably, the compound film includes a compound selected from a group consisting of compounds represented by a following general formula (1) and compounds represented by a following general formula (2): 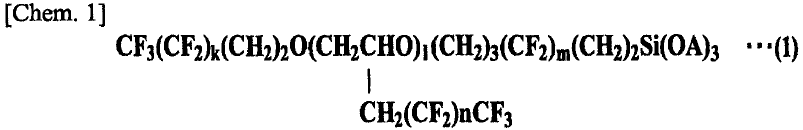 (where A is an alkyl group, k is an integer of 10 to 50000,1 is an integer of 1 to 1000, m is an integer of 1 to 1000, and n is an integer of 1 to 100), and 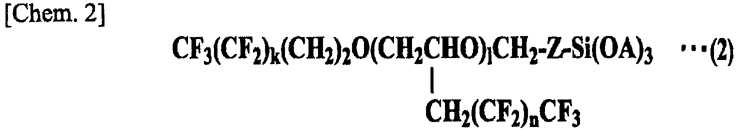 (where A is an alkyl group, Z is a straight chain functional group which is (CH2)m, O(CH2)m or (CH2)2O(CH2)mO(CH2), k is an integer of 10 to 50000,1 is an integer of 1 to 1000, m is an integer of 1 to 1000, and n is an integer of 1 to 100).

Preferably, the film mirror includes a hard coat layer provided under the antifouling layer.

Preferably, the film mirror includes an inorganic primer layer as a second layer from the light incident side and a hard coat layer as a third layer from the light incident side.

Preferably, the inorganic primer layer includes polysilazane.

Preferably, the hard coat layer includes an ultraviolet absorber.

Preferably, the hard coat layer includes an antioxidant.

Preferably, the film mirror further includes an ultraviolet absorption layer provided between the antifouling layer and the reflecting layer.

Preferably, the film mirror further includes a gas barrier layer provided between the antifouling layer and the reflecting layer.

Preferably, the film mirror further includes a corrosion prevention layer provided on the light incident side of the reflecting layer.

According to another embodiment of the invention, there is provided a reflecting device for solar thermal power generation which is formed by pasting the above film mirror onto a support base material.

### EFFECTS OF THE INVENTION

In accordance with the present invention, there can be provided; the film mirror for solar thermal power generation which is excellent in antifouling performance and scratch resistance, and is excellent in weatherability so that good regular reflectance can be maintained against the sunlight for a long period even if the film mirror is installed in a severe environment for a long period; and the reflecting device for solar thermal power generation which uses the film mirror concerned.

### BRIEF DESCRIPTION OF THE DRAWINGS

FIG 1 is a schematic cross-sectional view showing a reflecting film as a constituent member of a film mirror for solar thermal power generation.
FIG 2A is a schematic cross-sectional view showing an example of a configuration of a film mirror for solar thermal power generation according to the present invention, which shows a front surface mirror.
FIG 2B is a schematic cross-sectional view showing an example of a configuration of a film mirror for solar thermal power generation according to the present invention, which shows a back surface mirror.
FIG 3A is an explanatory drawing showing comparative example 1 of a film mirror for solar thermal power generation.
FIG 3B is an explanatory drawing showing comparative example 2 of a film mirror for solar thermal power generation.
FIG 3C is an explanatory drawing showing comparative example 3 of a film mirror for solar thermal power generation.
FIG 3D is an explanatory drawing showing comparative example 4 of a film mirror for solar thermal power generation.
FIG 4A is an explanatory drawing showing example 1 of a film mirror for solar thermal power generation.
FIG 4B is an explanatory drawing showing example 2 of a film mirror for solar thermal power generation.
FIG 4C is an explanatory drawing showing example 3 of a film mirror for solar thermal power generation.
FIG 4D is an explanatory drawing showing example 4 of a film mirror for solar thermal power generation.
FIG 4E is an explanatory drawing showing example 5 of a film mirror for solar thermal power generation.
FIG 4F is an explanatory drawing showing example 6 of a film mirror for solar thermal power generation.
FIG 4G is an explanatory drawing showing example 7 of a film mirror for solar thermal power generation.
FIG 4H is an explanatory drawing showing example 8 of a film mirror for solar thermal power generation.

### MODE FOR CARRYING OUT THE INVENTION

A film mirror for solar thermal power generation according to the present invention is a film mirror for solar thermal power generation which includes a reflecting layer on/over a resin base material, and characterized in that an antifouling layer having inorganic fine particles dispersed therein is provided at the outermost layer on a light-incident-side. The inorganic fine particles have two or more different particle diameters, for example, ranging from 0.5 nm to 100 nm. Such a structural feature is a main technical feature common to inventions according to the respective claims from Claim 1 to Claim 13. Note that, in the film mirror for solar thermal power generation, there are two modes of a back surface mirror and a front surface mirror. The back surface mirror is an embodiment including a resin layer with a thickness of 10 µm or more between a sunlight incident surface and the reflecting layer, and the front surface mirror is an embodiment not including such a resin layer.

In a desert, unlike such dirt as observed in a usual region, dirt caused by adhesion of sand is large. In particular, dew condensation water is generated on a front surface of the mirror by the fact that a temperature difference between day and night is large, sand dirt contained in water droplets thereof promotes a coagulation reaction in the water, and further, insoluble salt is generated and strongly adhered onto the front surface of the mirror. Owing to such a phenomenon, for the film mirror for solar thermal power generation, antifouling processing for making it difficult for the sand dirt to be adhered onto the front surface thereof is necessary. As the antifouling layer, there are those in which front surfaces exhibit hydrophilicity and repellency. When a method according to the present invention is used, an antifouling layer with super hydrophilicity (contact angle: 10° or less) or super repellency (contact angle: 120° or more) can be formed. When the front surface of the antifouling layer is super hydrophilic, then the sand dirt derived from the dew condensation water can be washed away by a small amount of water though is adhered thereonto. When the surface concerned is repellent, the surface becomes less likely to be soiled from the beginning since the dew condensation water becomes difficult to be adhered onto such a mirror surface.

In the present invention, the antifouling layer is used in which the inorganic fine particles with different particle diameters ranging from 0.5 nm to 100 nm being dispersed. In the case where the antifouling layer is formed with the inorganic fine particles as described above, an extremely thin antifouling layer is formed, and accordingly, damage by ultraviolet rays can be suppressed to the minimum extent. Moreover, the inorganic fine particles react with a hydroxyl group on a front surface of a hard coat layer or an inorganic primer layer so as to form silanol coupling that is hardly damaged by the ultraviolet rays, and accordingly, the damage by the ultraviolet rays is extremely small.

Moreover, if fluorine molecules having an alkoxy silyl group are coated on a layer of the inorganic fine particles, then the super repellency is obtained.

Preferably, the film mirror has a hard coat layer. Preferably, the film mirror contains an ultraviolet absorber in the hard coat layer and more preferably, further contains an antioxidant therein.

Moreover, preferably, the film mirror has a corrosion prevention layer. Preferably, the film mirror has a configuration in which an ultraviolet absorption layer is provided on a front surface side of the corrosion prevention layer, or the ultraviolet absorber is contained in any one layer among constituent layers provided on a front surface side of the reflecting layer. In a similar way, preferably, the antioxidant is contained in any one layer among the constituent layers provided on the front surface side of the reflecting layer.

Furthermore, any one layer among the constituent layers provided on the front surface side of the reflecting layer is formed as a gas barrier layer.

A description is made below in detail of the film mirror for solar thermal power generation according to the present invention. Note that, in order to carry out the present invention, a variety of technically preferable limitations are imposed on embodiments to be mentioned below; however, the scope of the invention is not limited to the following embodiments and illustrated examples.

### (1) Outline of Configuration of Film Mirror for Solar Thermal Power Generation

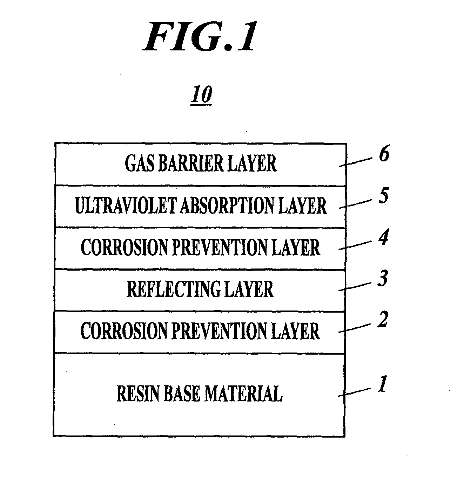

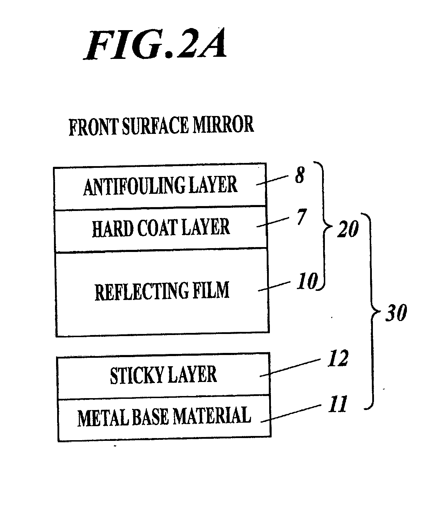

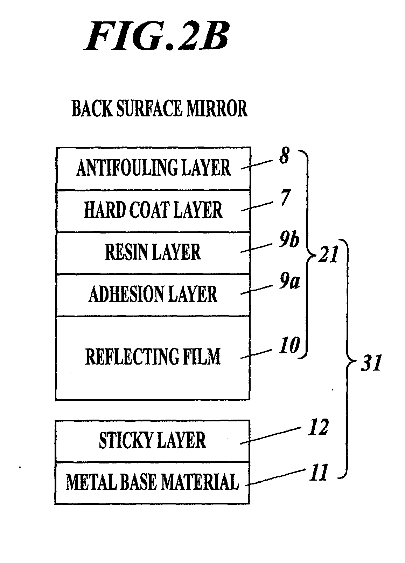

By using FIG. 1, a description is made of an outline of a reflecting film as a constituent member of the film mirror for solar thermal power generation according to the present invention. Moreover, by using FIG 2A and FIG 2B, a description is made of a configuration outline of the film mirror for solar thermal power generation.

As shown in FIG 1, a reflecting film 10 includes a reflecting layer 3 provided on/over a resin base material 1 as a film base material, and on this reflecting layer 3, a corrosion prevention layer 4 and an ultraviolet absorption layer 5 are provided as constituent layers. Moreover, it is also a preferable aspect to provide a corrosion prevention layer 2 between the resin base material 1 and the reflecting layer 3, and it is a more preferable aspect to provide a gas barrier layer 6 on the ultraviolet absorption layer 5.

A description is made of such a film mirror for solar thermal power generation, which includes this reflecting film 10 in a main portion, while taking, as examples thereof, a film mirror 20 of a front surface mirror type, which is shown in FIG 2A, and a film mirror 21 of a back surface mirror type, which is shown in FIG. 2B.

As shown in FIG. 2A, the film mirror 20 includes a hard coat layer 7 and an antifouling layer 8 on the gas barrier layer 6 of the reflecting film 10. This film mirror 20 forms a configuration of including the antifouling layer 8 on the outermost layer on a light incident side, and including the hard coat layer 7 under the antifouling layer 8. Note that the film mirror 20 may form a configuration of including an inorganic primer layer as a second layer from the light incident side, and providing the hard coat layer 7 as a third layer therefrom.

As shown in FIG 2B, the film mirror 21 includes the hard coat layer 7 and the antifouling layer 8 on the gas barrier layer 6 of the reflecting film 10 via an adhesion layer 9a and a resin layer 9b. This film mirror 21 forms a configuration of including the antifouling layer 8 on the outermost layer on the light incident side, and including the hard coat layer 7 under the antifouling layer 8. Note that the film mirror 21 may form a configuration of including the inorganic primer layer as a second layer from the light incident side, and providing the hard coat layer 7 as a third layer therefrom. In particular, this film mirror 21 is a film mirror of a type in which the thick resin layer 9b, for example, with a thickness of 10 µm or more is provided between a light incident surface (antifouling layer 8) and a reflecting surface (reflecting layer 3).

The film mirror of the present invention is effective no matter which configuration may be adopted between the front surface mirror type like the film mirror 20 and the back surface mirror type like the film mirror 21.

Note that, from viewpoints of deflection prevention, regular reflectance, handling easiness and the like, a thickness of the whole of the film mirror according to the present invention is preferably 25 to 300 µm, more preferably 35 to 200 µm, and still more preferably 50 to 100 µm.

### (2) Resin Base Material

As the resin base material 1, a variety of resin films heretofore known in public can be used. For example, there can be mentioned a cellulose ester-based film, a polyester-based film, a polycarbonate-based film, a polyarylate-based film, a polysulfone (also including polyethersulfone)-based film, a film of polyester such as polyethylene terephthalate and polyethylene naphthalate, a polyethylene film, a polypropylene film, cellophane, a cellulose diacetate film, a cellulose triacetate film, a cellulose acetate propionate film, a cellulose acetate butyrate film, a polyvinylidene chloride film, a polyvinyl alcohol film, an ethylene vinyl alcohol film, a syndiotactic polystyrene-based film, a polycarbonate film, a norbornene-based resin film, a polymethyl pentene film, a polyether ketone film, a polyether ketone imide film, a polyamide film, a fluorine resin film, a Nylon film, a polymethyl methacrylate film, an acrylic film, and the like.

Among them, the polycarbonate-based film, the polyester-based film, the norbornene-based resin film and the cellulose ester-based film and the acrylic film are preferable, and in particular, it is preferable to use the polyester-based film and the acrylic film. These resin films may be either films manufactured by melt casting film forming or films manufactured by solution casting film forming.

Preferably, a thickness of this resin base material 1 is set at an appropriate thickness in response to a type of the resin, a purpose and the like. For example, as a general thickness, the thickness of the resin base material 1 preferably ranges from 10 to 300 µm. The thickness is more preferably 20 to 200 µm, still more preferably 30 to 100 µm.

### (3) Corrosion Prevention Layer

Preferably, the corrosion prevention layer 2 and the corrosion prevention layer 4 are provided adjacent to the reflecting layer 3. In particular, more preferably, the corrosion prevention layer is adjacent to the light incident side of the reflecting layer 3 like the corrosion prevention layer 4.

The corrosion prevention layer 2 and the corrosion prevention layer 4 contain a corrosion inhibitor, and in particular, contain a corrosion inhibitor against silver contained in the reflecting layer 3. Being broadly divided, as the corrosion inhibitor, a corrosion inhibitor having an adsorptive group for silver and a corrosion inhibitor having an antioxidant capacity (which is also referred to as an antioxidant) are preferably used. Here, the "corrosion" refers to a phenomenon that metal (silver) is chemically or electrochemically eroded or deteriorated in terms of material by environmental materials which surround the same metal (refer to JIS Z0103-2004).

Note that an optimum content of the corrosion inhibitor differs depending on the compound for use; however, preferably, is within a range of 0.1 to 1.0 /m² in general.

### (3-1) Corrosion Inhibitor Having Adsorptive Group for Silver

Desirably, the corrosion inhibitor having the adsorptive group for silver is at least one of amines and derivatives thereof, a compound having a pyrrole ring, a compound having a triazole ring, a compound having a pyrazole ring, a compound having a thiazole ring, a compound having an imidazole ring, a compound having an indazole ring, copper chelate compounds, thioureas, a compound having a mercapto group, naphthalenes, or is selected from mixtures of these.

As the amines and the derivatives thereof, there are mentioned ethylamine, laurylamine, tri-n-butylamine, o-toluidine, diphenylamine, ethylenediamine, diethylenetriamine, triethylenetetramine, tetraethylenepentamine, monoethanolamine, diethanolamine, triethanolamine, 2N-dimethylethanolamine, 2-amino-2-methyl-1,3-propanediol, acetamide, acylamide, benzamide, p-ethoxychrysoidine, dicyclohexylammonium nitrite, dicyclohexylammonium salicylate, monoethanolamine benzoate, dicyclohexylammonium benzoate, diisopropylammonium benzoate, diisopropylammonium nitrite, cyclohexylamine carbamate, nitronaphthaleneammonium nitrite, cyclohexylamine benzoate, dicyclohexylammonium cyclohexanecarboxylate, cyclohexyl aminecyclohexanecarboxylate, dicyclohexylammonium acrylate, cyclohexylamine acrylate and the like, or mixtures of these.

As the compounds having the pyrrole ring, there are mentioned N-butyl-2,5-dimethylpyrrole, N-phenyl-2,5-dimethylpyrrole, N-phenyl-3-formyl-2,5-dimethylpyrrole, N-phenyl-3,4-diformyl-2,5-dimethylpyrrole and the like, or mixtures of these.

As the compounds having the triazole ring, there are mentioned 1,2,3-triazole, 1,2,4-triazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolytriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-tert-butylphenyl)benzotriazole, 2-(2'-hydroxy-3'5'-di-tert-butylphenyl)benzotriazole, 2-(2'-hydroxy-4-octoxyphenyl)benzotriazole and the like, or mixtures of these.

As the compounds having the pyrazole ring, there are mentioned pyrazole, pyrazoline, pyrazolone, pyrazolidine, pyrazolidone, 3,5-dimethylpyrazole, 3-methyl-5-hydroxypyrazole, 4-aminopyrazole and the like, or mixtures of these.

As the compounds having the thiazole ring, there are mentioned thiazole, thiazoline, thiazolone, thiazolidine, thiazolidone, isothiazole, benzothiazole, 2-N,N-diethylthiobenzothiazole, p-dimethylaminobenzalrhodanine, 2-mercaptobenzothiazole and the like, or mixtures of these.

As the compounds having the imidazole ring, there are mentioned imidazole, histizine, 2-heptadecylimidazole, 2-methylimidazole, 2-ethyl-4-methylimidazole, 2-phenylimidazole, 2-undecylimidazole, 1-benzyl-2-methylimidazole, 2-phenyl-4-methylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 2-phenyl-4-methyl-5-hydromethylimidazole, 2-phenyl-4,5-dihydroxymethylimidazole, 4-formylimidazole, 2-methyl-4-formylimidazole, 2-phenyl-4-formylimidazole, 4-methyl-5-formylimidazole, 2-ethyl-4-methyl-5-formylimidazole, 2-phenyl-4-methyl-4-formylimidazole, 2-mercaptobenzoimidazole and the like, or mixtures of these.

As the compounds having the indazole ring, there are mentioned 4-chloroindazole, 4-nitroindazole, 5-nitroindazole, 4-chloro-5-nitroindazole and the like, or mixtures of these.

As the copper chelate compounds, there are mentioned acetylacetone copper, ethylenediamine copper, phthalocyanine copper, ethylenediamine tetraacetate copper, hydroxyquinoline copper and the like, or mixtures of these.

As the thioureas, there are mentioned thiourea, guanylthiourea and the like, or mixtures of these.

As the compounds having the mercapto group, including the above-described materials, there are mentioned mercaptoacetic acid, thiophenol, 1,2-ethanediol, 3-mercapto-1,2,4-triazole, 1-methyl-3-mercapto-1,2,4-triazole, 2-mercaptobenzothiazole, 2-mercaptobenzoimidazole, glycoldimercapto acetate, 3-mercaptopropyltrimethoxysilane and the like or mixtures of these.

As the naphthalenes, there are mentioned thionalide and the like.

### (3-2) Antioxidant

As the antioxidant that is the corrosion inhibitor having the antioxidant capacity, preferably, a phenol-based antioxidant, a thiol-based antioxidant and a phosphite-based antioxidant are used.

As the phenol-based antioxidant, for example, there are mentioned 1,1,3-tris(2-methyl-4-hydroxy-5-t-butylphenyl)butane, 2,2'-methylenebis(4-ethyl-6-t-butylphenol), tetrakis-[methylene-3-(3',5'-di-t-butyl-4'-hydroxyphenyl)propionate]methane, 2,6-di-t-butyl-p-cresol, 4,4'-thiobis(3-methyl-6-t-butylphenol), 4,4'-butylidenebis(3-methyl-6-t-butylphenol),1,3,5-tris(3',5'-di-t-butyl-4'-hydroxybenzyl)-S-triazine-2,4,6-(1H,3H,5H)trione, stearyl-β-(3,5-di-t-butyl-4-hydroxyphenyl)propionate, triethylene glycol bis[3-(3-t-butyl-5-methyl-4-hydroxyphenyl)propionate], 3,9-bis{1,1-di-methyl-2-[β-(3-t-butyl-4-hydroxy-5-methylphenyl)propionyloxy]ethyl}-2,4,8,10-tetraoxioxaspiro[5,5]undecane, 1,3,5-trimethyl-2,4,6-tris(3,5-di-t-butyl-4- hydroxybenzyl)benzene and the like. In particular, those in which a molecular weight is 550 or more are preferable as the phenol-based antioxidant.

As the thiol-based antioxidant, for example, there are mentioned distearyl-3,3'-thiodipropionate, pentaerythritol-tetrakis-(β-lauryl-thiopropionate) and the like.

As the phosphite-based antioxidant, for example, there are mentioned tris(2,4-di-t-butylphenyl)phosphate, distearylpentaerythritol diphosphite, di(2,6-di-t-butylphenyl)pentaerythritol diphosphite, bis-(2,6-di-t-butyl-4-methylphenyl)-pentaerythritol diphosphite, tetrakis(2,4-di-t-butylphenyl)-4,4-biphenylene-diphosphonite, 2,2'-methylenebis(4,6-di-t-butylphenyl)octylphosphite and the like.

Note that, in the present invention, the above-described antioxidants and light stabilizers to be described below can also be used in combination.

As a hindered amine-based light stabilizer, for example, there are mentioned bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-(3,5-di-t-butyl-4-hydroxybenzyl)-2-n-butylmalonate, 1-methyl-8-(1,2,2,6,6-pentamethyl-4-piperidyl)-sebacate,1-{2-[3-(3,5-di-t-butyl-4-hydroxyphenyl)propionyloxy]ethyl}-4-[3-(3,5-di-t-butyl-4-hydroxyphenyl)propionyloxy]-2,2,6,6-tetramethylpiperidine, 4-benzoyloxy-2,2,6,6-tetramethylpiperidine, tetrakis(2,2,6,6-tetramethyl-4-piperidyl)-1,2,3,4-butane-tetracarboxylate, triethylenediamine, 8-acetyl-3-dodecyl-7,7,9,9 tetramethyl-1,3,8-triazaspir0[4,5]decane-2,4-dione and the like.

In particular, as the hindered amine-based light stabilizer, a hindered amine-based light stabilizer that contains only a tertiary amine is preferable, and specifically, bis(1,2,2,6,6-pentamethyl-4-piperidyl)-sebacate, bis(1,2,2,6,6-pentamethyl-4-piperidyl)-2-(3,5-di-t-butyl-4-hydroxybenzyl)-2-n-butylmalonate, or a condensate of 1,2,2,6,6-pentamethyl-4-piperidinol/tridecylalcohol and 1,2,3,4-butanetetracarboxylic acid is preferable.

Besides, a nickel-based ultraviolet stabilizer is usable as the light stabilizer. As the nickel-based ultraviolet stabilizer, there are mentioned [2,2'-thiobis(4-t-octylphenolate)]-2-ethylhexylamine nickel (II), nickel complex-3,5-di-t-butyl-4-hydroxybenzyl-phosphoric acid monoethylate, nickel-dibutyl-dithiocarbamate and the like.

### (4) Reflecting Layer

The reflecting layer 3 is a layer made of metal or the like, which has a function to favorably reflect the sunlight. Surface reflectance of the reflecting layer 3 is preferably 80% or more, more preferably 90% or more.

Preferably, the reflecting layer 3 is formed of a material that contains any element selected from among an element group which consists of Al, Ag, Cr, Cu, Ni, Ti, Mg, Rh, Pt and Au, and more preferably, the reflecting layer 3 contains Al or Ag as a main component from viewpoints of the reflectance and the corrosion resistance. In the reflecting layer 3, two or more thin films of the metal described above may be formed. In particular, the reflecting layer 3 in the present invention is preferably a silver reflecting layer that contains silver (Ag) as a main component.

As a forming method of this reflecting layer 3, either of a wet process or a dry process can be used.

The wet process is a general term of plating methods, and is a method of depositing metal from a solution and forming a film. Specific examples include a silver mirror reaction.

Meanwhile, the dry process is a general term of vacuum film forming methods, and specific examples, which are illustrated, include a resistance heating vacuum deposition method, an electron beam heating vacuum deposition method, an ion plating method, an ion beam-assisted vacuum deposition method, a sputtering method and the like. Among them, a deposition method capable of a roll-to-roll process of continuously forming a film is preferably used in the present invention. For example, in a manufacturing method of the film mirror for solar thermal power generation, the dry process is a manufacturing method of forming the reflecting layer 3 by silver deposition.

From viewpoints of the reflectance and the like, a thickness of the reflecting layer is preferably 10 to 200 nm and more preferably 30 to 150 nm.

Note that the reflecting layer 3 may be located on either the light incident side (front surface side) or the opposite side (back surface side) therewith; however, since the resin base material made of resin is used, the reflecting layer 3 is preferably located on the light incident side in order to prevent a deterioration of the resin by the sun beam.

### (5) Ultraviolet Absorption Layer

The ultraviolet absorption layer 5 is a layer composed by containing an ultraviolet absorber for the purpose of preventing the deterioration of the film mirror by the sunlight and the ultraviolet rays. Preferably, the ultraviolet absorption layer 5 is provided on the front surface side (light incident side) of the corrosion prevention layer 4.

Moreover, besides providing the ultraviolet absorption layer 5 in the reflecting film 10, the ultraviolet absorber may be added to any one layer of the constituent layers provided on the resin base material 1. Moreover, preferably, the ultraviolet absorber is also added to the hard coat layer 7 to be described later.

As organic ultraviolet absorbers, there are mentioned benzophenone-based, benzotriazole-based, phenyl salicylate-based and triazine-based ones, and the like, and as inorganic ultraviolet absorbers, there are mentioned titanium oxide, zinc oxide, cerium oxide, iron oxide and the like.

As the benzophenone-based ultraviolet absorbers, there are mentioned 2,4-dihydroxybenzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, 2,2',4,4'-tetrahydroxybenzophenone and the like.

As the benzotriazole-based ultraviolet absorbers, there are mentioned 2-(2'-hydroxy-5-methylphenyl) benzotriazole, 2-(2'-hydroxy-3',5'-di-t-butylphenyl) benzotriazole, 2-(2'-hydroxy-3'-t-butyl-5'-methylphenyl) benzotriazole and the like.

As the phenyl salicylate-based ultraviolet absorbers, there are mentioned phenyl salicylate, 2-4-di-t-butylphenyl-3,5-di-t-butyl-4-hydroxybenzoate and the like. As the hindered amine-based ultraviolet absorbers, there are mentioned bis(2,2,6,6-tetramethylpiperidine-4-yl)sebacate and the like.

As the triazine-based ultraviolet absorbers, there are mentioned 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5 triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine and the like.

Besides those described above, as the ultraviolet absorbers, a compound can also be used which has a function to convert energy imparted from the ultraviolet ray into vibration energy in molecules and liberate the vibration energy as heat energy and the like. Moreover, such an ultraviolet absorber which expresses an effect thereof by use in combination with an antioxidant, a colorant or the like, or a light stabilizer which is called a quencher and acts in such a manner as a light energy converting agent can also be used in combination. However, when using the above-described ultraviolet absorbers, it is necessary to select an ultraviolet absorber in which a light absorption wavelength does not overlap a light absorption wavelength of a photopolymerization initiator.

In the case of using a usual ultraviolet absorber, it is effective to use a photopolymerization initiator that generates radicals by visible light.

A used amount of the ultraviolet absorber is 0.1 to 20 mass%, preferably 1 to 15 mass%, and more preferably 3 to 10 mass%. When the amount is more than 20 mass%, adhesion properties of the constituent layers are deteriorated, and when the amount is less than 0.1 mass%, an effect of enhancing the weatherability is small.

### (6) Gas Barrier Layer

The gas barrier layer 6 is for preventing deterioration of the resin base material 1, the respective constituent layers supported on the resin base material 1, and the like which is caused by variations of humidity, and in particular, by high humidity. The gas barrier layer 6 may be imparted with special functions/purposes, and gas barrier layers with a variety of aspects can be provided as long as they have the above-described deterioration prevention function. In the present invention, preferably, the gas barrier layer 6 is provided on the front surface side (light incident side) of the ultraviolet absorption layer 5.

With regard to moisture resistance of the gas barrier layer 6, water vapor transmission rate at 40° and 90% RH is preferably 1 g/m²·day or less, more preferably 0.5 g/m²·day or less, and still more preferably 0.2 g/m²·day or less. Moreover, oxygen transmission rate of the gas barrier layer 6 is preferably 0.6 ml/m²/day/atm or less under conditions where measurement temperature is 23°C and humidity is 90% RH.

As a forming method of the gas barrier layer 6 in the present invention, there is mentioned a method of forming an inorganic oxide by a method such as a vacuum vapor deposition method, sputtering, ion beam assist, and a chemical vapor deposition method. Also, there is preferably used a method of forming an inorganic oxide film in such a manner that a precursor of an inorganic oxide by a sol-gel method is coated, and thereafter, the film thus coated is subjected to heat treatment and/or ultraviolet irradiation treatment.

### (6-1) Inorganic Oxide

The inorganic oxide is one formed of sol, which is composed of an organic metal compound as a raw material, by local heating. For example, the inorganic oxide is an oxide of an element such as silicon (Si), aluminum (Al), zirconium (Zr), titanium (Ti), tantalum (Ta), zinc (Zn), barium (Ba), indium (In), tin (Sn) and niobium (Nb), which is contained in the organic metal compound. For example, the inorganic oxide is silicon oxide, aluminum oxide, zirconium oxide or the like. Among them, the silicon oxide is preferable.

As a method for forming the inorganic oxide in the present invention, a so-called sol-gel method or polysilazane method is preferably used. The sol-gel method is a method of forming an inorganic oxide from an organic metal compound as a precursor of an inorganic oxide, and the polysilazane method is a method of forming an inorganic oxide from polysilazane as a precursor of an inorganic oxide.

### (6-2) Precursor of Inorganic Oxide

The gas barrier layer 6 can be formed by coating a precursor that can form an inorganic oxide by heating, followed by application of heating using a general method. Preferably, the gas barrier layer 6 is formed by using local heating. Preferably, the precursor is an organic metal compound-sol or polysilazane.

### (6-3) Organic Metal Compound

Preferably, the organic metal compound contains at least one element among silicon (Si), aluminum (Al), lithium (Li), zirconium (Zr), titanium (Ti), tantalum (Ta), zinc (Zn), barium (Ba), indium (In), tin (Sn), lanthanum (La), yttrium (Y) and niobium (Nb). In particular, preferably, the organic metal compound contains at least one element among silicon (Si), aluminum (Al), lithium (Li), zirconium (Zr), titanium (Ti), zinc (Zn) and barium (Ba). More preferably, the organic metal compound contains at least one element among silicon (Si), aluminum (Al) and lithium (Li).

The organic metal compound may be any as long as being hydrolysable, and is not particularly limited; however, metal alkoxide is mentioned as a preferable organic metal compound.

This metal alkoxide is represented by the following general formula (3):

MR²ₘ(OR¹)ₙ₋ₘ (3)

In the above-described formula (3), M is metal with an oxidation number of n. R¹ and R² are each independently an alkyl group, and m is an integer of 0 to (n-1).

R¹ and R² may be the same or different from each other. Preferably, each of R¹ and R² is an alkyl group having four or less carbon atoms. More preferably, for example, each of R¹ and R² is a lower alkyl group such as a methyl group CH₃ (hereinafter, also denoted as Me), an ethyl group C₂H₅ (hereinafter, also denoted as Et), a propyl group C₃H₇ (hereinafter, also denoted as Pr), an isopropyl group i-C₃H₅ (hereinafter, also denoted as i-Pr), a butyl group C₄H₉ (hereinafter, also denoted as Bu), and an isobutyl group i-C₄H₇ (hereinafter, also denoted as i-Bu).

Moreover, as the metal alkoxide represented by the above-described formula (3), for example, there are preferably mentioned lithium ethoxide LiOEt, niobium ethoxide Nb(OEt)₅, magnesium isopropoxide Mg(OPr-i)₂, aluminum isopropoxide Al(OPr-i)₃, zinc propoxide Zn(OPr)₂, tetraethoxysilane Si(OEt)₄, titanium isopropoxide Ti(OPr-i)₄, barium ethoxide Ba(OEt)₂, barium isopropoxide Ba(OPr-i)₂, triethoxyborane B(OEt)₃, zirconium propoxide Zr(OPr)₄, lanthanum propoxide La(OPr)₃, yttrium propoxide Y(OPr)₃, lead isopropoxide Pb(OPr-i)₂ and the like. All of these metal alkoxides are commercially available, and can be obtained with ease. Moreover, a low condensation product obtained by partial hydrolysis is also commercially available for such a metal alkoxide and such a product is also usable as a raw material.

### (6-4) Sol-gel Method

Here, the "sol-gel method" refers to a method of preparing metal oxide glass with a specific shape (film shape, particle shape, fibrous shape and the like) in such a manner that an organic metal compound is hydrolyzed to obtain a hydroxide-sol, the sol is turned to gel by dehydration and the gel is subjected to heat treatment. It is also possible to obtain multicomponent metal oxide glass by a method of mixing a plurality of different sol- solutions, a method of adding other metal ions and the like.

Specifically, the inorganic oxide is preferably produced by a sol-gel method including the following steps.

That is to say, it is more preferable to use the following sol-gel method from viewpoints that there will not occur generation of micropores, deterioration of the film or the like, which may be caused by high-temperature heat treatment. The method includes: a step to obtain a reaction product by subjecting an organic metal compound to hydrolysis and dehydration condensation by using halogen ions as a catalyst in the presence of boron ions in a reaction solution which contains at least water and an organic solvent, while adjusting the pH of the reaction solution at 4.5 to 5.0; and a step to vitrify the reaction product by heating the reaction product at a temperature of 200°C or less.

In this sol-gel method, the organic metal compound to be used as a raw material just needs to be hydrolysable, and is not particularly limited; however, the metal alkoxides described above are mentioned as preferable organic metal compounds.

In the sol-gel method, the organic metal compound described above may be used for the reaction as it is; however, preferably, the organic metal compound is used by being diluted with a solvent in order to facilitate control for the reaction. What is necessary for such a solvent for dilution is that the solvent can dissolve the organic metal compound and can be homogeneously mixed with water. Such a solvent for the dilution, there are preferably mentioned aliphatic lower alcohols, for example, such as methanol, ethanol, propanol, isopropanol, butanol, isobutanol, ethylene glycol, propylene glycol and mixtures of these. Moreover, a mixed solvent of butanol, cellosolve and butyl cellosolve, a mixed solvent of xylol, cellosolve acetate, methyl isobutyl ketone and cyclohexane, or the like is also usable.

In the case where the metal is Ca, Mg, Al or the like in this organic metal compound, the metal may react with water in the reaction solution and generate a hydroxide, or generate carbonate salt when carbonate ions CO₃²⁻ are present, so as to cause a precipitation.
Accordingly, an alcoholic solution of triethanolamine is added as a masking agent into the reaction solution. A concentration of the organic metal compound when the organic metal compound is mixed and dissolved into the solvent is preferably 70 mass% or less, and the organic metal compound is preferably used by being diluted within a range of 5 to 70 mass%.

The reaction solution used in the sol-gel method contains at least water and an organic solvent. It is just necessary as the organic solvent to form a uniform solution with water, acid and alkali. In general, similar ones to lower aliphatic alcohols for use in the dilution of the organic metal compound are preferably mentioned. Among the lower aliphatic alcohols, propanol, isopropanol, butanol and isobutanol, in each of which a carbon number is larger, are preferable rather than methanol and ethanol. This is because growth of the generated film of the metal oxide glass is stable. Preferably, a ratio of water, which is a concentration of water in the reaction solution, ranges from 0.2 to 50 mol/L.

Moreover, in the sol-gel method, the organic metal compound is hydrolyzed by using halogen ions as a catalyst under the presence of boron ions in the reaction solution. Trialkoxyboranes B(OR)₃ are preferably mentioned as compounds which give the boron ion B³⁺. Among them, triethoxyborane B(OEt)₃ is more preferable. Moreover, a concentration of the B³⁺ ions in the reaction solution preferably ranges from 1.0 to 10.0 mol/L.

Fluorine ions and/or chlorine ions are preferably mentioned as the halogen ions. That is to say, the halogen ions may by singly the fluorine ions or singly the chlorine ions, or may be a mixture of these. A compound for use just needs to be one that generates the fluorine ions and/or the chlorine ions in the reaction solution. For example, ammonium hydrogen fluoride NH₄HF·HF, sodium fluoride NaF and the like are preferably mentioned as fluorine ion sources, and ammonium chloride NH₄Cl and the like are preferably mentioned as chlorine ion sources.

A concentration of the halogen ions in the reaction solution differs depending on a thickness of the film composed of an inorganic composition having an inorganic matrix to be produced, and on other conditions; however, in general, the concentration of the halogen ions ranges preferably from 0.001 to 2 mol/kg, particularly preferably from 0.002 to 0.3 mol/kg with respect to a total mass of the reaction solution containing the catalyst. When the concentration of the halogen ions is lower than 0.001 mol/kg, then it becomes difficult for the hydrolysis of the organic metal compound to proceed sufficiently, and it becomes difficult to form the film. Meanwhile, when the concentration of the halogen ions exceeds 2 mol/kg, the inorganic matrix (metal oxide glass) to be generated becomes prone to be non-uniform. Accordingly, both cases are not preferable.

With regard to the boron used at the time of the reaction, in the case where the boron concerned is to be contained as a B₂O₃ component in a designed composition of the inorganic matrix to be obtained, a product can be produced while adding a calculated amount of an organic boron compound which corresponds to a content of the B₂O₃ component concerned. On the other hand, when the boron is desired to be removed, the formed film may be heated under the presence of methanol as a solvent or while being immersed into the methanol after the film formation, so that the boron will be evaporated and removed as boron methyl ester.

In the step of obtaining a reaction product by subjecting an organic metal compound to hydrolysis and dehydration condensation, in general, a main agent solution in which a predetermined amount of the organic metal compound is mixed and dissolved into a mixed solvent containing predetermined amounts of water and an organic solvent, and a reaction solution which contains a predetermined amount of the halogen ions, are mixed in a predetermined ratio and are sufficiently stirred so as to prepare a uniform reaction solution, and thereafter, the pH of the reaction solution is adjusted to a desired value by acid or alkali, then the reaction solution is aged for a few hours to progress the reaction thereof, and the reaction product is obtained. A predetermined amount of the boron compound is previously mixed and dissolved into the main agent solution or in the reaction solution. Moreover, in the case of using alkoxyborane, advantageously, the alkoxyborane is dissolved into the main agent solution together with other organic metal compounds.

The pH value of the reaction solution is selected in accordance with the purpose.
When it is intended to form a membrane (film) composed of an inorganic composition having an inorganic matrix (metal oxide glass), preferably, the reaction solution is aged, for example, while adjusting the pH thereof to 4.5 to 5 by using acid such as hydrochloric acid. In this case, for example, it is convenient if a mixture of Methyl Red and Bromocresol Green, or the like is used as an indicator.

In the sol-gel method, the main agent solution and the reaction solution (containing the B³⁺ and halogen ions) which are of the same components and of the same concentrations are sequentially added supplementally in the same ratio while adjusting the pH thereof to the predetermined value, whereby the reaction product can be produced continuously with ease. Note that the concentration of the reaction solution can be changed within a range of ±50 mass%, the concentration of water (containing acid or alkali) can be changed within a range of ±30 mass%, and the concentration of the halogen ions can be changed within a range of ±30 mass%.

Next, the reaction product obtained in the preceding step (that is, the reaction solution after being aged) is vitrified by being heated and dried at a temperature of 200°C or less. In the event of the heating, preferably, the temperature is raised carefully and gradually in a temperature interval of 50 to 70°C in particular as a pre-drying (solvent volatilization) step, and is further raised after the pre-drying. In the case of forming a film, this drying is important to form the film as a nonporous film. The heating and drying temperature after the pre-drying step is preferably 70 to 150°C and more preferably 80 to 130°C.

### (7) Hard Coat Layer

In the present invention, preferably the hard coat layer 7 is provided on the second layer or the third layer from the light incident side. In the case of providing the hard coat layer 7 on the second layer from the light incident side, then a chemisorptive monomolecular compound which composes a compound film of the antifouling layer 8 to be described later and a hydroxyl group of the front surface of the hard coat layer 7 react with each other, and an extremely dense antifouling film can be formed.

A material that forms the hard coat layer 7 is not particularly limited as long as transparency, weatherability, hardness, mechanical strength and the like are obtained. For example, a resin which is cured by irradiation of an electron beam or an ultraviolet ray, thermosetting resin, or the like may be used. In particular, the material is preferably a thermosetting silicon-based hard coat composed of a partially hydrolyzed oligomer of an alkoxysilane compound, a hard coat composed of thermosetting polysiloxane resin, an ultraviolet curing acrylic hard coat composed of an acrylic compound having an unsaturated group, or a thermosetting inorganic material. Moreover, preferably, the hard coat layer 7 contains the above-mentioned antioxidant (antioxidant added to the corrosion prevention layer 3) and the above-mentioned ultraviolet absorber (ultraviolet absorber added to the ultraviolet absorption layer 5).

Moreover, as such materials usable for the hard coat layer 7, there are mentioned: acrylic resin containing aqueous colloidal silica (Japanese Patent Laid-Open Publication No. 2005-66824); a polyurethane-based resin composition (Japanese Patent Laid-Open Publication No. 2005-110918); a resin film using an aqueous silicone compound as a binder (Japanese Patent Laid-Open Publication No. 2004-142161); a silica film or alumina containing a photocatalytic oxide such as titanium oxide, or a photocatalyst film of titanium oxide with a high aspect ratio or niobium oxide (Japanese Patent Laid-Open Publication No. 2009-62216); fluorine resin coating containing a photocatalyst (Pialex Technologies Corp.); organic/inorganic polysilazane films; and organic/inorganic polysilazane films containing a hydrophilicity-accelerating agent (AZ Electronic Materials Ltd.). Among them, preferably, the hard coat layer 7 is composed of an inorganic matter since it is easier to form the antifouling layer 8 and advantageous from viewpoints of the dirt resistance and weatherability in the case of using the hard coat layer 7 the front surface of which exhibits hydrophilicity.

For the thermosetting silicon-based hard coat layer, a partially hydrolyzed oligomer of an alkoxysilane compound synthesized by a publicly known method can be used. An example of a synthesis method thereof is as follows. First, tetramethoxysilane or tetraethoxysilane as the alkoxysilane compound is added with a predetermined amount of water under the presence of an acid catalyst such as hydrochloric acid or nitric acid, and is allowed to proceed a reaction at room temperature to 80°C while removing alcohol produced as a by-product. By this reaction, the alkoxysilane is hydrolyzed and further by a condensation reaction, a partially hydrolyzed oligomer of the alkoxysilane compound is obtained, in which two or more silanol groups or alkoxy groups are provided in one molecule and an average degree of polymerization is 4 to 8. Next, the oligomer is added with a curing catalyst such as acetic acid or maleic acid, and an obtained mixture is dissolved into an alcohol or glycol ester-based organic solvent, whereby a thermosetting silicon-based hard coat solution is obtained. Then, the solution is coated onto an outer surface of the reflecting film 10 or the like by an application method in a usual coating and is heated and cured at a temperature of 80 to 140°C, whereby a hard coat layer is formed. Note that, in this case, it is premised that the curing temperature is set at a thermal deformation temperature of the reflecting film 10 or less. Note that it is possible to form a polysiloxane-based hard coat layer in a similar way by using di(alkyl or aryl) dialkoxysilane and/or mono(alkyl or aryl) trialkoxysilane in place of the tetraalkoxysilane.

For the ultraviolet curing acrylic hard coat layer, as the acrylic compound having the unsaturated group, there can be used a polyfunctional (meth)acrylate mixture such as pentaerythritol di(meth)acrylate, diethylene glycol di(meth)acrylate, trimethylol propane tri(meth)acrylate, and tetramethylol tetra(meth)acrylate, and the like. This acrylic compound is used by being blended with a photopolymerization initiator such as benzoin, benzoin methyl ether and benzophenone. Then, this is coated onto the outer surface of the reflecting film 10 or the like and is cured by an ultraviolet ray, whereby the hard coat layer is formed.

Moreover, preferably, the hard coat layer 7 is subjected to surface treatment and is thereby imparted with hydrophilicity For example, there can be mentioned corona treatment (Japanese Patent Laid-Open Publication No. H11-172028), plasma surface treatment, ultraviolet/ozone treatment, surface protrusion formation (Japanese Patent Laid-Open Publication No. 2009-226613), surface micromachining treatment, and the like.

As a fabrication method of the hard coat layer 7, a coating method heretofore known in public such as a gravure coating method, a reverse coating method, and a die coating method can be used.

In the case where the hard coat layer 7 is composed of an inorganic material, the hard coat layer 7 can be formed by performing film formation for silicon oxide, aluminum oxide, silicon nitride, aluminum nitride, lanthanum oxide, lanthanum nitride and the like by the vacuum film forming methods. As the vacuum film forming methods, for example, there are a resistance heating vacuum deposition method, an electron beam heating vacuum deposition method, an ion plating method, an ion beam-assisted vacuum deposition method, a sputtering method and the like.

Moreover, in the case where the hard coat layer 7 is composed of an inorganic material, preferably, the hard coat layer 7 is composed of a film formed by coating a polysilazane and film-forming thereof, followed by heating and curing. In the case where a precursor of the hard coat contains polysilazane, then a solution which is obtained by adding a catalyst according to needs into an organic solvent containing, for example, polysilazane represented by the following general formula (4), is coated on the reflecting film 10, and thereafter, the solvent is removed by being evaporated, whereby a polysilazane layer having a layer thickness of 0.05 to 3.0 µm is left on the reflecting film 10. Then, preferably, there is adopted a method of forming a coating film of a glass-like transparent hard coat on the reflecting film 10 by locally heating the above-described polysilazane layer under the presence of oxygen, or active oxygen, or nitrogen according to the case in an atmosphere containing water vapor:

-(SiR¹R²-NR³)ₙ- (4)

In the formula (4), R¹, R² and R³ are the same or different from one another, and each independently represents a hydrogen or a substituted or non-substituted alkyl group, aryl group, vinyl group or (trialkoxysilyl) alkyl group, and preferably, a group selected from the group consisting of hydrogen, methyl, ethyl, propyl, iso-propyl, butyl, iso-butyl, tert-butyl, phenyl, vinyl, 3-(triethoxysilyl)propyl and 3-(trimethoxysilyl)propyl. In this event, n is an integer, and n is determined so that the polysilazane can have a number average molecular weight of 150 to 150,000 g/mol.

As the catalyst, preferably, a basic catalyst is used, and particularly preferably, used is N,N-diethylethanolamine, N,N-dimethylethanolamine, triethanolamine, triethylamine, 3-morpholinopropylamine or an N-heterocyclic compound. When polysilazane is taken as a reference, a concentration of the catalyst usually ranges from 0.1 to 10 mol%, and preferably ranges from 0.5 to 7 mol%.

As one of preferable aspects, there is used a solution containing perhydropolysilazane in which all of R¹, R² and R³ in the formula (4) represent hydrogen atoms.

Moreover, in another preferable aspect, the hard coat layer 7 of the present invention contains at least one type of polysilazane represented by the following formula (5):

-(SiR¹R²-NR³)ₙ-(SiR⁴R⁵-NR⁶)ₚ- (5)

In the formula (5), R¹, R², R³, R⁴, R⁵ and R⁶ each independently represents hydrogen, or a substituted or non-substituted alkyl group, aryl group, vinyl group or (trialkoxysilyl)alkyl group. In this event, n and p are integers, and in particular, n is determined so that the polysilazane can have a number average molecular weight of 150 to 150,000 g/mol.

Particularly preferable ones are: a compound in which R¹, R³ and R⁶ represent hydrogen and R², R⁴ and R⁵ represent methyl; a compound in which R¹, R³ and R⁶ represent hydrogen, R² and R⁴ represent methyl, and R⁵ represents vinyl; and a compound in which R¹, R³, R⁴ and R⁶ represent hydrogen and R² and R⁵ represent methyl.

Furthermore, in still another preferable aspect, the hard coat layer 7 in the present invention contains at least one type of polysilazane represented by the following formula (6):

-(SiR¹R²-NR³)ₙ-(SiR⁴R-NR⁶)ₚ-(SiR⁷R⁸-NR⁹)_{q}, (6)

In the formula (6), R¹, R², R³, R , R⁵, R⁶, R⁷, R⁸ and R⁹ each independently represents hydrogen, or a substituted or non-substituted alkyl group, aryl group, vinyl group or (trialkoxysilyl)alkyl group. In this event, n, p and q are integers, and in particular, n is determined so that the polysilazane can have a number average molecular weight of 150 to 150,000 g/mol.

A particularly preferable one is a compound in which R¹, R³ and R⁶ represent hydrogen, R², R⁴, R⁵ and R⁸ represent methyl, R⁹ represents (triethoxy)propyl, and R⁷ represents alkyl or hydrogen.

A ratio of the polysilazane in the solvent is generally 1 to 80 mass%, preferably 5 to 50 mass%, and particularly preferably 10 to 40 mass%.

Particularly suitably, the solvent is an organic solvent, which does not contain water and a reactive group (for example, a hydroxyl group or an amine group) and is inert to polysilazane, and preferably, is a non-protonic solvent. For example, this is aliphatic or aromatic hydrocarbon, halogenated hydrocarbon, ester such as ethyl acetate and butyl acetate, ketone such as acetone and methyl ethyl ketone, ether such as tetrahydrofuran and dibutyl ether, mono- and poly-alkylene glycol dialkyl ether (diglymes), or a mixture composed of these solvents.

As an additional component of such a polysilazane solution, still another binder as conventionally used for producing paint can be used. For example, this is cellulose ether and cellulose ester such as ethyl cellulose, nitrocellulose, cellulose acetate and cellulose acetobutylate, natural resin such as rubber and rosin resin, or synthetic resin such as polymer resin and condensation resin, which includes aminoplast, in particular, urea resin and melamine formaldehyde resin, alkyd resin, acrylic resin, polyester or modified polyester, epoxide, polyisocyanate or blocked polyisocyanate, or polysiloxane.

Moreover, as another component to be further added to this polysilazane mixture, for example, there can be used: an additive, which affects viscosity of the mixture, wettability of the base, film forming properties, a lubricating function or exhaust properties; or inorganic nanoparticles, which are made of, for example, SiO₂, TiO₂, ZnO, ZrO₂ or Al₂O₃.

Preferably, a thickness of the coating film to be formed as the hard coat layer 7 is set within a range of 10 nm to 2 µm.

The hard coat layer 7, which contains polysilazane and is formed as described above, can also be used as an oxygen/water vapor barrier film.

Preferably, the hard coat layer 7 has flexibility and does not cause deflection. In some case, a dense crosslinking structure is formed on the front surface of the hard coat layer 7, and in that event, there occurs such a situation where the film is prone to be deflected and bent, and to be cracked because of no flexibility, resulting in that the film becomes difficult to handle. In such a case, preferably, the hard coat layer 7 is desired so that flexibility and planarity thereof can be obtained by adjusting an amount of the inorganic matter in the composition.

### (8) Inorganic Primer Layer

In the present invention, it is also a preferable aspect that an inorganic primer layer is provided between the hard coat layer 7 and the antifouling layer 8. This inorganic primer layer is a base of the antifouling layer 8.

The inorganic primer layer is not particularly limited as long as the inorganic primer layer concerned has such a configuration of being transparent and having a large amount of the hydroxyl group at a surface of the layer. The inorganic primer layer is preferably an inorganic layer formed of silica, alumina, zirconia and the like, and more preferably, is formed by containing polysilazane. The inorganic primer layer can be formed as a film by the vacuum film forming method or the sol-gel method, which is a forming method thereof. As the vacuum film forming method, for example, there are a resistance heating vacuum deposition method, an electron beam heating vacuum deposition method, an ion plating method, an ion beam-assisted vacuum deposition method, a sputtering method and the like.

### (9) Antifouling Layer

The antifouling layer 8 in the present invention has: an inorganic fine particle layer formed by dispersing therein inorganic fine particles different in sizes; and a compound film that coats the inorganic fine particle layer.

Preferably, the particle diameters of the inorganic fine particles for use in the inorganic fine particle layer in the antifouling layer 8 are smaller than the visible light wavelength (380 to 700 nm). Specifically, the particle diameters of the inorganic fine particles are preferably 0.5 to 400 nm, more preferably 0.5 to 300 nm, and still more preferably 0.5 to 100 nm.

The particle diameters of the inorganic fine particles for use in the antifouling layer 8 may be single; however, if such an inorganic particle layer is formed by using the inorganic fine particles having two or more different particle diameters in a mixing manner, then this is preferable since the front surface of the antifouling layer 8 is formed into a fractal structure having a fine irregularity structure, and accordingly, the antifouling layer 8 can be formed into a layer having high antifouling performance.

For example, in the case where a fractal structure resulting from a front surface shape of the inorganic fine particle layer is formed on the front surface of the antifouling layer 8, if hydrophilicity is imparted to the front surface of the antifouling layer 8, then the antifouling layer 8 expresses super-hydrophilicity, and if repellency is imparted to the front surface of the antifouling layer 8, then the antifouling layer 8 concerned expresses super-repellency.

If the front surface of the antifouling layer 8 is super-hydrophilic, then the water is likely to be spread thereon, and accordingly, it becomes easy to wash away the dirt adhered onto the front surface. Therefore, the antifouling layer 8 becomes less likely to be soiled, and antifouling performance of the film mirror is enhanced.

Meanwhile, if the front surface of the antifouling layer 8 is super-hydrophilic, then it is easy for the front surface to repel water droplets adhered onto the front surface concerned, and accordingly, such a situation where water droplets of rainwater and the like roll down can be made. Therefore, the dirt can be made less likely to be adhered onto the antifouling layer 8, and the antifouling performance of the film mirror is enhanced.

Note that, in the case of using the inorganic fine particles as a constituent material of a layer (thin film), an organic binder is usually used (Japanese Patent Laid-Open Publication No. 2007-52345); however, when the organic binder is used in this purpose, the organic binder is prone to be decomposed by ultraviolet rays. Accordingly, in the present invention, preferably, a small amount of an inorganic binder is used, or alternatively, any binder is not used. However, there is a problem that the inorganic fine particles are prone to be coagulated to an extreme extent at the time of being used singly. In order to form a layer in which a state of monodispersion is maintained, it is an effective method to vaporize a dispersion medium (solvent) while controlling a ζ (zeta) potential in the vicinities of the particles to be large, and thereby always maintaining repulsive force that acts among the particles. For this purpose, addition of a trace amount of a zeta potential control agent is performed, and the repulsive force among the particles is controlled. In this method, selection of the solvent, a type of the inorganic fine particles, the particle diameters, a type of the inorganic binder, an addition ratio thereof, and the like are precisely controlled, or alternatively, a time until the particles are coagulated in the removal process of the solvent is delayed, whereby a filling factor of the particles in the layer is lowered, and accordingly, a transparent thin film in which the inorganic fine particles are dispersed can be formed.

As the inorganic fine particles which are used as a material of the inorganic fine particle layer of the antifouling layer 8, inorganic matter such as alumina, silica and zirconia is used. And arbitrary fine particles can be used which have translucency and have, on surfaces thereof, an active hydrogen group such as a hydroxyl group and an amino group that may react with an alkoxy silyl group and a halosilyl group.

In the present invention, the inorganic fine particles are used in a mixed system of water and an organic solvent. As the organic solvent to be mixed with water, there are mentioned: alcohols such as methanol, ethanol, isopropanol, ethylene glycol, diethylene glycol, triethylene glycol, butylene glycol, and glycerin; N-methylpyrrolidine; dimethyl sulfoxide; phenols; amines; ketones; and the like; however, the organic solvent is not particularly limited to these.

As an inorganic binder when used, examples include a functional silane (silylation agent), for example, such as a tetramethoxysilane, tetraethoxysilane, monomethyl trimethoxysilane, monomethyl triethoxysilane, dimethyldimethoxysilane, dimethyldiethoxysilane, and phenyltrimethoxysilane.

Then, such a mixed solution of the inorganic fine particles and the organic solvent is coated on the hard coat layer 7, and the solvent is evaporated and removed, whereby the inorganic fine particle layer can be formed. For example, Super Glass Barrier (made by Sketch Co., Ltd.), which contains, as components, silica fine particles with different particle diameters of several nanometers, may be spray-coated, whereby the antifouling layer can be formed.

As the compound for use in the compound film in the antifouling layer 8, a compound which has an alkoxysilyl group and an organic fluorinated ether group or an organic fluorinated polyether group can be used. Note that, preferably, the compound film in the antifouling layer 8 is a monomolecular film. As a compound that forms the monomolecular film, a chemisorptive monomolecular compound is mentioned. Note that the monomolecular film mentioned here is such a substance as represented by a self-assembled monolayer (SAM), in which one functional group in the molecule forms chemical bond with the base material, other portions do not form chemical bond between the molecules, and only a film with a thickness corresponding to one molecule is formed.

As the chemisorptive monomolecular compound for use in the compound film in the antifouling layer 8, for example, there can be mentioned commercially available products such as: KBM-7803 (heptadecatrifluorodecyl trimethoxysilane) and KBM-7103 (trifluropropyl trimethoxysilane), which are made by Shin-Etsu Chemical Co., Ltd.; Optool (made by Daikin Industries, Ltd.); and FG-5020 made by Fluoro Technology.

Moreover, among such chemisorptive monomolecular compounds, a silane compound is preferable, in which a fluoroalkyl group in the silane compound is bonded to Si atoms in a ratio of one or less with respect to one Si atom, and the rest thereof is a hydrolysable group or a siloxane-linked group. For example, the hydrolysable group mentioned here is a group such as an alkoxy group which becomes a hydroxyl group by hydrolysis, whereby the chemisorptive monomolecular compound forms a polycondensate. For example, the silane compound is allowed to react with water (under the presence of an acid catalyst if necessary) usually within a range of room temperature to 100°C while evaporating alcohol generated as a byproduct. In such a way, alkoxysilane is (partially) hydrolyzed, a condensation reaction partially occurs therein, and the alkoxy silane can be obtained as a hydrolysate that has a hydroxyl group. Degrees of the hydrolysis and the condensation can be appropriately adjusted by an amount of the water to be reacted therewith. In the present invention, preferably, such a silane compound solution, which is used for the antifouling processing, is used while diluting a concentration of the solid content in the solution since the hydrolysis reaction is caused by moisture in the air and the like mainly at a drying time after preparation of the solution concerned without positively adding water to the solution.

The chemisorptive monomolecular compound as described above is used as a composition for the formation of the antifouling layer such that the compound is coated onto the base material (for example, the inorganic fine particle layer on the hard coat layer 7) and the hydrolysis and the polycondensation are allowed to proceed on the base material, whereby the antifouling layer 8, which is repellent for example, can be formed.

As a method of coating the compound film of the chemisorptive monomolecular compound, there are spin coat coating, dip coating, extrusion coating, roll coating, spray coating, gravure coating, wire bar coating, air knife coating and the like, and the method is not limited to these; however, the dip coating method of diluting a silane coupling agent by a solvent and immersing a resin base material (reflecting film 10 and the like) thereinto to thereby coat the resin base material with the silane coupling agent is preferable because of convenience thereof.

The chemisorptive monomolecular compound, having the alkoxysilyl group and the organic fluorinated ether group or the organic fluorinated polyether group and being used as a compound for the compound film (composition for formation of antifouling layer) in the antifouling layer 8, is preferably a compound represented by the following general formula (1) or the general formula (2). 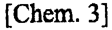 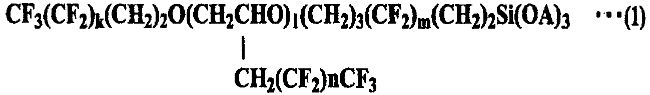 In the formula, A represents an alkyl group, k represents an integer of 10 to 50000, 1 and m each represents an integer of 1 to 1000, and n represents an integer of 1 to 100.

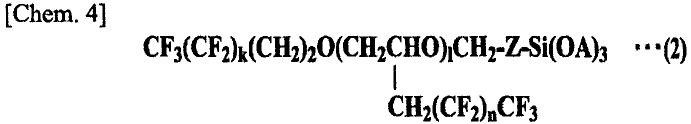

In the formula, A represents an alkyl group, Z is a straight chain functional group and represents (CH₂)ₘ, O(CH₂)ₘ, or (CH₂)₂O(CH₂)ₘO(CH₂), k represents an integer of 10 to 50000, 1 and m each represents an integer of 1 to 1000, and n represents an integer of 1 to 100.

In the compound represented by the above-described general formula (1), preferably, A is an alkyl group composed only of carbon and hydrogen, in which a carbon atom number is three or less. For example, A is a methyl group, ethyl group, isopropyl group or the like.

As the chemisorptive monomolecular compound preferably used in the present invention, there are mentioned CF₃(CH₂)₂Si(OCH₃)₃, CF₃(CH₂)₂Si(OC₂H₅)₃, CF₃(CH₂)₂Si(OC₃H₇)₃, CF₃(CH₂)₂Si(OC₄H₉)₃, CF₃(CF₂)₅(CH₂)₂Si(OCH₃)₃, CF₃(CF₂)₅(CH₂)₂Si(OC₂H₅)₃, CF₃(CF₂)₅(CH₂)₂Si(OC₃H₇)₃, CF₃(CF₂)₇(CH₂)₂Si(OCH₃)₃, CF₃(CF₂)₇(CH₂)₂Si(OC₂H₅)₃, CF₃(CF₂)₇(CH₂)₂Si(OC₃H₇)₃, CF₃(CF₂)₇(CH₂)₂Si(OCH₃)(OC₃H₇)₂, CF₃(CF₂)₇(CH₂)₂Si(OCH₃)₂OC₃H₇, CF₃(CF₂)₇(CH₂)₂SiCH₃(OCH₃)₂, CF₃(CF₂)₇(CH₂)₂SiCH₃(OC₂H₅)₂, CF₃(CF₂)₇(CH₂)₂SiCH₃(OC₃H₇)₂, (CF₃)₂CF(CF₂)₈(CH₂)₂Si(OCH₃)₃, C₇F₁₅CONH(CH₂)₃Si(OC₂H₅)₃, C₈F₁₇SO₂NH(CH₂)₃Si(OC₂H₅)₃, C₈F₁₇(CH₂)₂OCONH(CH₂)₃Si(OCH₃)₃, CF₃(CF₂)₇(CH₂)₂Si(CH₃)(OCH₃)₂, CF₃(CF₂)₇(CH₂)₂Si(CH₃)(OC₂H₅)₂, CF₃(CF₂)₇(CH₂)₂Si(CH₃)(OC₃H₇)₂, CF₃(CF₂)₇(CH₂)₂Si(C₂H₅)(OCH₃)₂, CF₃(CF₂)₇(CH₂)2Si(C₂H₅)(OC₃H₇)₂, CF₃(CH₂)₂Si(CH₃)(OCH₃)₂, CF₃(CH₂)₂Si(CH₃)(OC₂H₅)₂, CF₃(CH₂)₂Si(CH₃)(OC₃H₇)₂, CF₃(CF₂)₅(CH₂)₂Si(CH₃)(OCH₃)₂, CF₃(CF₂)₅(CH₂)₂Si(CH₃)(OC₃H₇)₂,CF₃(CF₂)₂O(CF₂)₃(CH₂)₂Si(OC₃H₇), C₇F₁₅CH₂O(CH₂)₃Si(OC₂H₅)₃, C₈F₁₇SO₂O(CH₂)₃Si(OC₂H₅)₃, C₈F₁₇(CH₂)₂OCHO(CH₂)₃Si(OCH₃)₃ and the like; however, the chemisorptive monomolecular compound is not limited to these.

In such an antifouling layer-forming composition to be used as the compound film of the antifouling layer 8, preferably, the antifouling layer-forming composition concerned is used while adjusting pH thereof to 5.0 or less by addition of acid. Acid accelerates the hydrolysis of the silane compound and functions as a catalyst of a polycondensation reaction, accordingly, makes it easy to form a polycondensation film of the silane compound on the front surface of the base material and can enhance the antifouling performance. The pH concerned is recommended to be within a range of 1.5 to 5.0. When the pH is 1.5 or less, acidity of the solution is too strong, causing an apprehension that a container and a pipe may be damaged, and when the pH is 5.0 or more, the reaction is less likely to proceed. More preferably, the pH is within a range of 2.0 to 4.0.

In the present invention, water is not positively added to the silane compound solution for use in the formation of the antifouling layer 8, and after the preparation thereof, the hydrolysis reaction is caused by the moisture in the air and the like mainly at the drying time. For this purpose, the silane compound solution is used after the concentration of the solid content in the solution concerned is diluted. When water is added too much to the processed solution, a pot life of an obtained product is shortened by that amount.

As the curing catalyst for use in the formation of the antifouling layer 8 (compound film) in the present invention, there are mentioned inorganic acids such as sulfuric acid, hydrochloric acid, nitric acid, hypochlorous acid, boric acid and hydrogen fluoride, and preferably, an inorganic acid such as the hydrochloric acid, nitric acid and the like. Besides, there are mentioned organic acids having a sulfo group (also referred to as a sulfonic acid group) or a carboxyl group, for example, acetic acid, polyacrylic acid, benzenesulfonic acid, paratoluenesulfonic acid, methylsulfonic acid, and the like. It is more preferable if the organic acid is a compound having a hydroxyl group and a carboxyl group in one molecule, and for example, citric acid or hydroxydicarbonic acid such as tartaric acid is used. Furthermore, more preferably, the organic acid is water-soluble acid, and for example, as well as the citric acid and the tartaric acid, there are preferably used levulinic acid, formic acid, propionic acid, malic acid, succinic acid, methylsuccinic acid, fumaric acid, oxaloacetic acid, pyruvic acid, 2-oxoglutaric acid, glycolic acid, D-glyceric acid, D-gluconic acid, malonic acid, maleic acid, oxalic acid, isocitric acid, lactic acid and the like. Moreover, benzoic acid, hydroxybenzoic acid, atropic acid and the like can also be used as appropriate. It is recommended that a loading of the catalyst is 0.1 part by mass to 10 parts by mass, and preferably 0.2 part by mass to 5 parts by mass with respect to 100 parts by mass of the partial hydrolysate of the silane compound. Moreover, a loading of water just needs to be an amount or more, by which the partial hydrolysate can be theoretically hydrolyzed at 100%, and it is recommended that water is added by an amount corresponding to 100% to 300%, preferably, an amount corresponding to 100% to 200% of the partial hydrolysate. The coating composition for the antifouling layer, which is obtained as described above, is extremely stable.

The coating composition for the antifouling layer, which is obtained as described above, is uniformly coated onto the base material (for example, the inorganic fine particle layer on the hard coat layer 7), whereby the antifouling layer 8 (compound film) is formed. Arbitrary methods may be used as a coating method and there are mentioned methods using usual dip coater, gravure coater, reverse roll coater, extrusion coater and the like. Moreover, in order to further improve the antifouling function, film adhesion and other physical properties of the antifouling layer 8, ultraviolet irradiation treatment, heating treatment, plasma treatment and the like may be performed.

Moreover, after the preparation of the coating composition for the antifouling layer, an aging step is provided, whereby the crosslinking of the organic silicon compound by the hydrolysis and the condensation proceeds sufficiently, and characteristics of the obtained coating film become excellent. For the aging, it is just sufficient that the chemisorptive monomolecular compound is dissolved, pH and the like thereof are adjusted, and the coating composition solution thus prepared is left standing. A time the coating composition solution is to be left standing is while the above-described crosslinking proceeds to an extent sufficient to obtain desired film characteristics. Although depending on a type of the catalyst for use, specifically, at room temperature, one hour or more is sufficient for the nitric acid, and for the acetic acid, several hours or more, that is, eight hours to one week are sufficient, and approximate three days are usual. Since an aging temperature affects an aging time, it is sometimes better to employ means for heating the coating composition solution up to approximate 20°C in a cold climate. In general, the aging proceeds rapidly at high temperature; however, the coating composition solution gelates when being heated to 100°C or more, and accordingly, it is appropriately heat the coating composition solution up to at most 50 to 60° .

Use of the silane compound containing fluorine is not only preferable in terms of lowering of a refractive index of the antifouling layer 8 and impartment of water/oil repellency thereto, but also brings an effect that the antifouling layer 8 concerned has high scratch resistance and is particularly excellent in blocking between films. In the present invention, more preferably, a coating composition is used, which is composed by further adding alkoxysilane or alkylalkoxysilane to the chemisorptive monomolecular compound and an organic solvent solution that does not contain fluorine. The alkoxysilane and the alkylalkoxysilane, which do not contain fluorine, may be any silane compound known in public; however, as representatives thereof, there are mentioned tetraalkoxysilane (tetramethoxysilane, tetraethoxysilane and the like), alkyltrialkoxysilane (methyltrimethoxysilane, ethyltrimethoxysilane and the like), dialkyldialkoxysilane, and the like. These alkoxysilanes and alkylalkoxysilanes just need to be used by being mixed within a range of 0.01 to 15 mass% in addition to the fluorine-containing silane compound in the event of preparing the coating composition for the antifouling layer. Each of the alkoxysilanes and the alkylalkoxysilanes is hydrolyzed and condensed in a similar way to the above, is thereby polycondensed together with the silane compound containing fluorine, and forms a film integrally therewith. These alkoxysilanes and alkylalkoxysilanes are used by being mixed with the silane compound containing fluorine, whereby film strength is enhanced, and this is more effective for enhancing the scratch resistance and preventing the blocking when the film is stacked on others.

Moreover, as shown in FIG. 2B, the adhesion layer 9a and the resin layer 9b may be provided between the reflecting film 10 and the hard coat layer 7.

### (10) Adhesion Layer

The adhesion layer 9a is not particularly limited as long as having a function to enhance adhesiveness between the reflecting film 10 (gas barrier layer 6) and the resin layer 9b. Then, the adhesion layer 9a just needs to have adhesion properties which adhere the reflecting film 10 and the resin layer 9b to each other, and to have smoothness for exploiting high reflecting performance inherent in the reflecting layer 3.

From viewpoints of the adhesion properties and smoothness of the adhesion layer 9a, the reflectance of the reflecting layer 3, and the like, a thickness of the adhesion layer 9a is preferably 0.01 to 3 µm, and more preferably 0.1 to 1 µm.

In the case where the adhesion layer 9a is resin, the resin is not particularly limited as long as the resin meets conditions such as the above-described adhesion properties, smoothness and the like. As the resin, there can be used polyester-based resin, acrylic-based resin, melamine-based resin, epoxy-based resin, polyamide-based resin, vinyl chloride-based resin, vinyl chloride-vinyl acetate copolymer-based resin, and the like. These resins can be used singly or as mixed resins. In terms of the weatherability, mixed resin of the polyester-based resin and the melamine-based resin is preferable, and it is more preferable if thermosetting resin further mixed with a curing agent such as isocyanate is used. As a forming method of this adhesion layer 9a, there can be used a coating method such as a gravure coating method, a reverse coating method, and a die coating method, which are heretofore known in public.

Moreover, in the case where the adhesion layer 9a is metal oxide, for example, the adhesion layer 9a can be formed by forming, as a film, silicon oxide, aluminum oxide, silicon nitride, aluminum nitride, lanthanum oxide, lanthanum nitride or the like by a variety of vacuum film forming methods. For example, the adhesion layer 9a can be formed by a resistance heating vacuum deposition method, an electron beam heating vacuum deposition method, an ion plating method, an ion beam-assisted vacuum deposition method, a sputtering method and the like.

### (11) Resin Layer

As the resin layer 9b, a resin film similar to the resin base material 1 mentioned above can be used, and in particular, an acrylic film is preferable.

A thickness of this resin layer 9b is, for example, 10 to 300 µm.

### (12) Reflecting Device for Solar Thermal Power Generation

As shown in FIG 2A and FIG 2B, the reflecting devices 30 and 31 for solar thermal power generation are at least composed of the film mirrors 20 and 21 and the metal base material 11 as the support base material. Preferably, the reflecting device 30/31b for solar thermal power generation includes sticky layer 12 for adhering the film mirror 20/21 and the metal base material 11 to each other. The film mirror 20/21 can be preferably used for the purpose of condensing the sunlight.

For example, there is mentioned a mode, in which the reflecting device for solar thermal power generation is formed into a gutter shape (semicylindrical shape), a cylindrical member having fluid therein is provided at a center portion of a semicircle that is located on a reflecting surface side, the fluid inside is heated by condensing the sunlight onto the cylindrical member, and resultant thermal energy is converted to generate electric power.

Moreover, as another mode, there is also mentioned a mode, in which planar reflecting devices for solar thermal power generation are installed at a plurality of spots, the sunlight reflected by each of the reflecting devices is condensed onto one reflecting mirror (center reflecting mirror), and thermal energy obtained by reflection on the reflecting mirror is converted in a power generation unit to thereby generate electric power. In the latter mode, high regular reflectance is required for the reflecting device, and accordingly, the film mirrors 20 and 21 of the present invention can be used particularly preferably.

### (12-1) Metal Base Material

As the metal base material 11 for the reflecting device 30/31 for solar thermal power generation according to the present invention, there can be used: a metal material having high thermal conductivity such as a steel plate, copper plate, aluminum plate, aluminum-plated steel plate, aluminum-based alloy-plated steel plate, copper-plated steel plate, tin-plated steel plate, chromium-plated steel plate, and stainless steel plate; and a steel plate in which resin and such a metal plate are combined with each other.

In the present invention, in particular, the plated steel plate, the stainless steel plate, the aluminum plate and the like, which have good corrosion resistance, are preferable. More preferably, the steel plate in which the resin and the metal plate are combined with each other is used.

### (12-2) Sticky Layer

The sticky layer 12 for adhering the metal base material 11 and the film mirror 20/21 to each other in the reflecting device 30/31 for solar thermal power generation is not particularly limited, and for example, any of a dry laminating agent, wet laminating agent, adhesive, heat sealing agent, hot melt agent and the like is used. As the adhesive, for example, polyester-based resin, urethane-based resin, polyvinyl acetate-based resin, acrylic-based resin, nitrile rubber and the like are used. A laminating method is not particularly limited, and for example, continuous lamination using a roll method is preferable in terms of economy and productivity.

In usual, a thickness of the sticky layer 12 preferably ranges approximately from 1 to 100 µm from viewpoints of an adhesive effect, a drying speed and the like.

Note that, besides the metal base materials, other base materials to be pasted onto the film mirror 20/21 of the present invention just need to be those which can protect the reflecting layer 3 and the like. For example, there are used: an acrylic film or sheet, a polycarbonate film or sheet, a polyacrylate film or sheet, a polyethylene naphthalate film or sheet, a polyethylene terephthalate film or sheet; a plastic film or sheet such as a fluorine film; a resin film or sheet in which titanium oxide, silica, aluminum powder, copper powder and the like are kneaded; and a resin film or sheet formed by coating thereon the resin having any of these powders kneaded therein, and being subjected to surface treatment such as metal deposition.

A thickness of the laminated film or sheet is not particularly limited; however, in usual, preferably ranges from 12 to 250 µm.

Moreover, these other base materials may be pasted to the film mirrors 20 and 21 of the present invention after recessed portions and protruding portions are provided thereon, or alternatively, may be molded so that the recessed portions and the protruding portions can be provided thereon after being pasted to the film mirrors 20 and 21. Alternatively, the other base materials may be molded so that the recessed portions and the protruding portions can be provided at the same time of being pasted to the film mirrors 20 and 21.

### EXAMPLES

A description is specifically made below of the present invention by using examples and comparative examples. However, the present invention is not limited to these. In the following examples and comparative examples, notations of "part" and "%" are used, and these denote "part by mass" and "mass%", respectively, unless otherwise particularly specified.

Note that film mirrors in the following examples and comparative examples are film mirrors of the back surface mirror type.

### [Fabrication of Reflecting Film]

As the resin base material 1, a biaxially oriented polyester film (polyethylene terephthalate film, thickness of 25 µm) was used.

One surface of this resin base material 1 was coated by a gravure coating method with a composition, in which polyester-based resin (Polyester SP-181 made by The Nippon Synthetic Chemical Industry Co., Ltd.) and TDI (tolylene diisocyanate)-based isocyanate (2,4-tolylene diisocyanate) were mixed with each other in a ratio of 10: 2 in resin solid content, methyl ethyl ketone was added as a solvent thereto, and further, as a corrosion inhibitor, glycol dimercapto acetate (made by Wako Pure Chemical Industries, Ltd.) was mixed thereto so that a ratio of the corrosion inhibitor became 10 mass%. In such a way, the corrosion prevention layer 2 with a thickness of 60 nm was formed.

Subsequently, on the corrosion prevention layer 2, silver was vacuum-evaporated, and the reflecting layer 3 with a thickness of 80 nm was formed.

Subsequently, the reflecting layer 3 was coated with the same composition as the above-described corrosion prevention layer 2 except that Tinuvin 234 (made by BASF Japan Ltd.) was used in place of the glycol dimercapto acetate. In such a way, the corrosion prevention layer 4 was formed.

Subsequently, by a gravure coating method, the corrosion prevention layer 4 was coated with an ultraviolet absorption polymer "New Coat UVA-204W" (made by Shin-Nakamura Chemical Co., Ltd.) so that a thickness of the ultraviolet absorption polymer could be 5 µm. In such a way, the ultraviolet absorption layer 5 was formed.

Subsequently, on the ultraviolet absorption layer 5, an alumina layer with a thickness of 100 nm was formed by a vacuum deposition method. In such a way, the gas barrier layer 6 was formed.

As described above, a reflecting film 10 similar to the reflecting film shown in FIG 1 was fabricated. By using this reflecting film 10, film mirrors of Comparative Examples 1 to 4 and Examples 1 to 8 were fabricated.

### [Comparative Example 1]

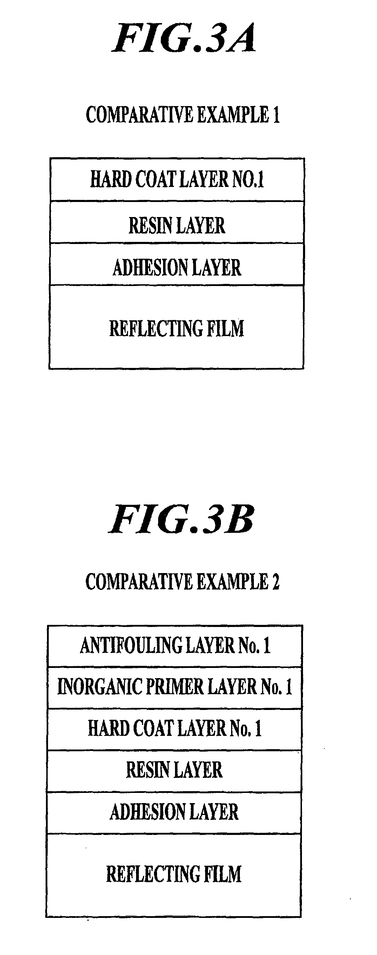

FIG 3A shows a configuration of Comparative Example 1.

The reflecting film 10 was coated with an adhesive TBS-730 (made by DIC Corporation) by a gravure coating method so that a thickness of the adhesive concerned could be 5 µm, whereby the adhesion layer 9a was formed. Onto the adhesion layer 9a, acrylic resin S001 (75 µm) made by Sumitomo Chemical Co., Ltd. was placed by a roll method, whereby the resin layer 9b was formed.

Onto the resin layer 9b, NN320 (made by AZ Electronic Materials Ltd.) which polysilazane was dispersed by 20 mass% into dibutyl ether was extrusion-coated so that a thickness thereof could be 7 µm, then dried at 70°C and 90% RH for 30 minutes, followed by heating and curing at 70°C for 24 hours, whereby the hard coat layer 7 (hard coat layer No. 1) was formed. In such a way, a film mirror of Comparative Example 1 was fabricated.

### [Comparative Example 2]

FIG. 3B shows a configuration of Comparative Example 2.

Onto the hard coat layer 7 (hard coat layer No. 1) of the film mirror of Comparative Example 1, PC-3B (made by Fluoro Technology) was coated, whereby an inorganic primer layer No. 1 of which a thickness became 100 nm or less was formed. The inorganic primer layer No. 1 was coated by a gravure coating method with one in which ZX-007-c and TDI-based isocyanate were mixed with each other in a ratio of 10: 1, and a resultant was diluted by methyl ethyl ketone until a solid content thereof became 10%, followed by heating and curing at 70°C for 30 minutes, whereby an antifouling layer (antifouling layer No. 1) with a thickness of 0.3 µm was formed. In such a way, a film mirror of Comparative Example 2 was fabricated. Note that the antifouling layer No. 1 is an antifouling layer that does not contain inorganic fine particles.

### [Comparative Example 3]

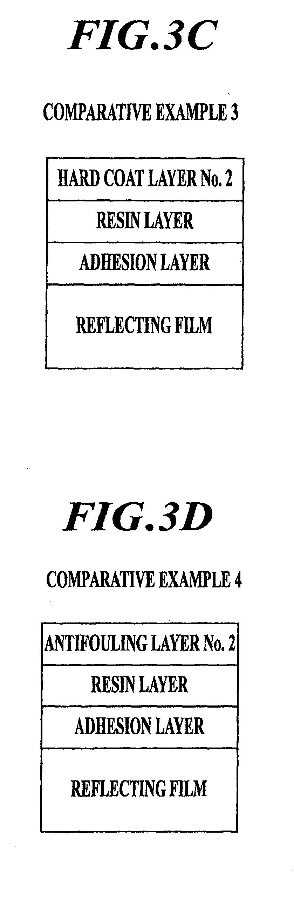

FIG. 3C shows a configuration of Comparative Example 3.

In place of the hard coat layer No. 1 in Comparative Example 1, a solution, in which 30 mass% of amorphous silica, 3 mass% of a photopolymerization initiator and 0.5 mass% of ZX-007-c were mixed into 66.5 mass% of acrylate-based resin, was bar-coated so that a dry film thickness could be 3 µm, and was pre-dried at 75°C, followed by ultraviolet curing, whereby the hard coat layer 7 (hard coat layer No. 2) was formed. In such a way, a film mirror of Comparative Example 3 was fabricated.

### [Comparative Example 4]

FIG 3D shows a configuration of Comparative Example 4.

Onto the reflecting film 10, the adhesive TBS-730 (made by DIC Corporation) was coated by a gravure coating method so that a thickness thereof could be 5 µm, whereby the adhesion layer 9a was formed. Onto the adhesion layer 9a, the acrylic resin S001 (75 µm) made by Sumitomo Chemical Co., Ltd. was placed by a roll method, whereby the resin layer 9b was formed.

The front surface of the resin layer 9b was subjected to corona treatment, and thereafter, was spray-coated with Super Glass Barrier (made by Sketch Co., Ltd.), whereby the antifouling layer 8 (antifouling layer No. 2) was formed. In such a way, a film mirror of Comparative Example 4 was fabricated.

### [Example 1]

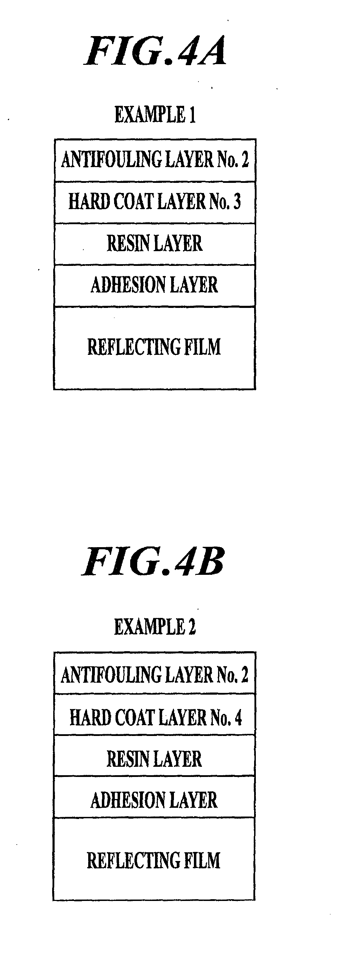

FIG 4A shows a configuration of Example 1.

Onto the reflecting film 10, the adhesive TBS-730 (made by DIC Corporation) was coated by a gravure coating method so that a thickness thereof could be 5 µm, whereby the adhesion layer 9a was formed. Onto the adhesion layer 9a, the acrylic resin S001 (75 µm) made by Sumitomo Chemical Co., Ltd. was placed by a roll method, whereby the resin layer 9b was formed.

Onto the resin layer 9b, a solution, in which 30 mass% of amorphous silica and 3 mass% of a photopolymerization initiator were mixed into 67 mass% of acrylate-based resin, was bar-coated so that a dry film thickness could be 3 µm, and was pre-dried at 75°C, followed by ultraviolet curing, whereby the hard coat layer 7 (hard coat layer No. 3) was formed.

The front surface of the hard coat layer 7 (hard coat layer No. 3) was subjected to corona treatment, and thereafter, was spray-coated with Super Glass Barrier (made by Sketch Co., Ltd.), whereby the antifouling layer 8 (antifouling layer No. 2) was formed. In such a way, a film mirror of Example 1 was fabricated.

### [Example 2]

FIG 4B shows a configuration of Example 2.

A film mirror of Example 2 was fabricated in a similar way to Example 1 except that the hard coat layer 7 (hard coat layer No. 4) with a film thickness of 1 µm was formed by vacuum deposition of alumina in place of the hard coat layer No. 3 in Example 1.

### [Example 3]

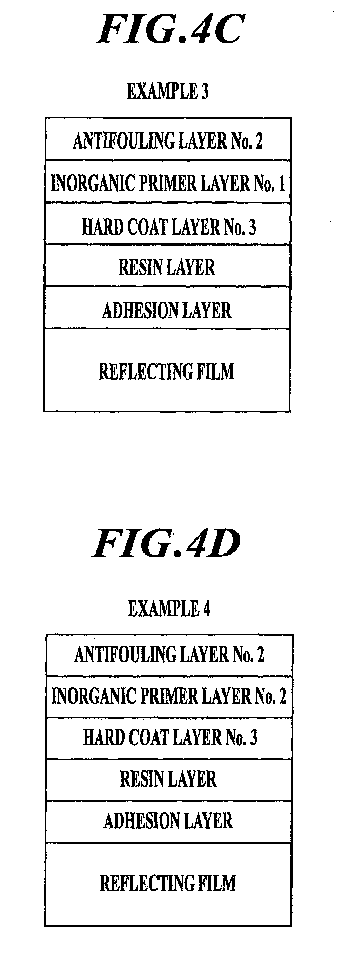

FIG 4C shows a configuration of Example 3.

Onto the hard coat layer No. 3 of Example 1, PC-3B (made by Fluoro Technology) was coated, whereby the inorganic primer layer No. 1 of which a thickness became 100 nm or less was formed. The inorganic primer layer No. 1 was spray-coated with Super Glass Barrier (made by Sketch Co., Ltd.), whereby the antifouling layer 8 (antifouling layer No. 2) was formed. In such a way, a film mirror of Example 3 was fabricated.

### [Example 4]

FIG. 4D shows a configuration of Example 4.

In place of the inorganic primer layer No. 1 of Example 3, NN320 (made by AZ Electronic Materials Ltd.) which polysilazane was dispersed by 20 mass% into dibutyl ether was extrusion-coated so that a thickness thereof could be 100 nm, then dried at 70°C and 90% RH for 30 minutes, followed by heating and curing at 70°C for 24 hours, whereby an inorganic primer layer No. 2 was formed. In such a way, a film mirror of Example 4 was fabricated.

### [Example 5]

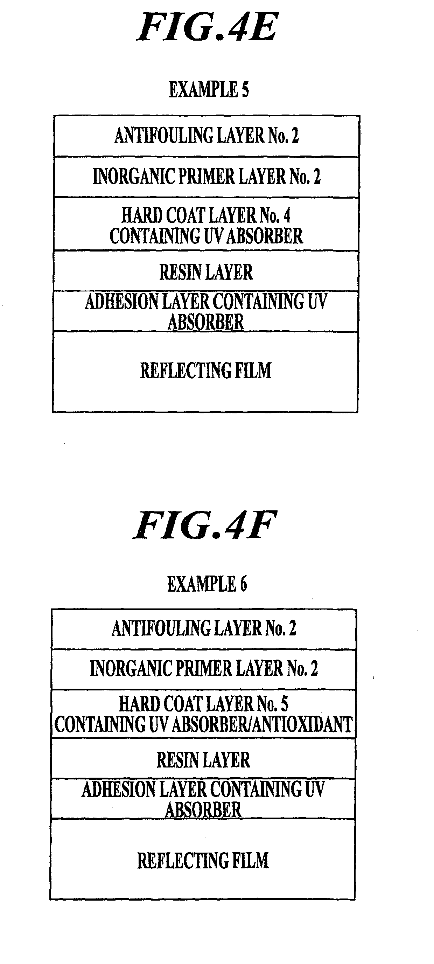

FIG 4E shows a configuration of Example 5.

In the film mirror of Example 4, Irganox 1176 (made by BASF Japan Ltd.) was contained as an ultraviolet absorber in the adhesion layer and the hard coat layer No. 3 on the reflecting film 10 so that a content thereof could be 0.01 g/m², whereby a hard coat layer No. 4 was formed. A film mirror of Example 5 was fabricated in a similar way to Example 4 except for the above.

### [Example 6]

FIG. 4F shows a configuration of Example 6.

In the hard coat layer No. 4 of Example 5, 2,2'-methylenebis(4,6-di-t-butylphenyl)octylphosphite (made by BASF Japan Ltd.) was contained as an antioxidant so that a content thereof could be 0.01 g/m², whereby a hard coat layer No. 5 was formed. A film mirror of Example 6 was fabricated in a similar way to Example 5 except for the above.

### [Example 7]

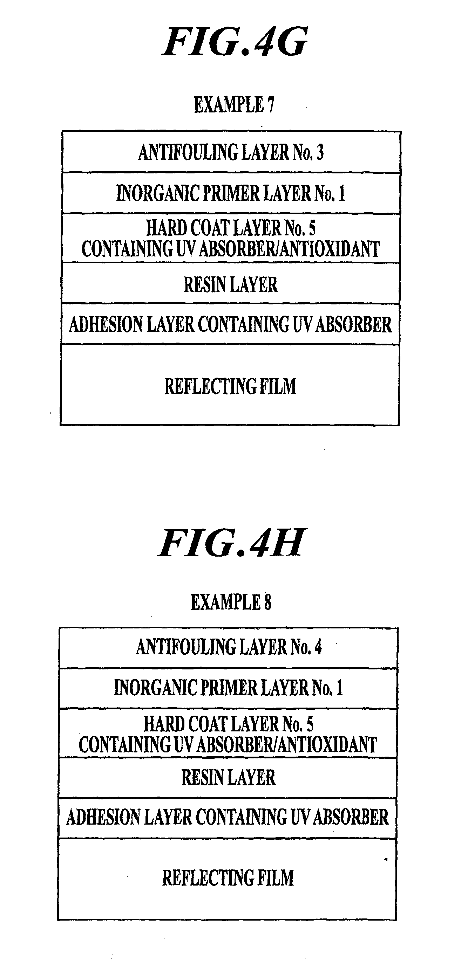

FIG. 4G shows a configuration of Example 7.

Onto the hard coat layer No. 5 in the film mirror of Example 6, PC-3B (made by Fluoro Technology) was coated, whereby the inorganic primer layer No. 1 of which a thickness became 100 nm or less was formed. The inorganic primer layer No. 1 was spray-coated with Super Glass Barrier (made by Sketch Co., Ltd.), and further, was coated with FG-5020 (made by Fluoro Technology) by a gravure coating method, whereby the antifouling layer 8 (antifouling layer No. 3) was formed. In such a way, a film mirror of Example 7 was fabricated.

### [Example 8]

FIG. 4H shows a configuration of Example 8.

In place of FG-5020 of the antifouling layer No. 3 of Example 7, Optool AES (made by Daikin Industries, Ltd.) was coated by a dip method, followed by natural drying, whereby an antifouling layer No. 4 was formed. A film mirror of Example 8 was fabricated in a similar way to Example 7 except for the above.

### [Evaluation of Film Mirror for Solar Thermal Power Generation]

With regard to the film mirrors for solar thermal power generation (Comparative Examples 1 to 4 and Examples 1 to 8) which were thus fabricated, a regular reflectance test, a steel wool test as a scratch resistance (ultraviolet resistance) test, a contact angle test and a drop angle test for scaling antifouling performance, and an outdoor exposure field test as a weatherability test were individually carried out in accordance with the following methods and the film mirrors were evaluated with regard to the respective items.

### [Measurement of Regular Reflectance]

By using a spectrophotometer "U-4100" made by Shimadzu Corporation, regular reflectance when an incident angle of incident light with respect to a normal line of the reflecting surface was 5° was measured. For the evaluation, average regular reflectance of values measured from 250 nm to 2500 nm was obtained.

### [Steel Wool Test]

As a test of the scratch resistance, steel wool (#0000) was attached as an abrasion material onto a reciprocating abrasion tester (HEIDON-14DR made by Shinto Scientific Co., Ltd.), and was allowed to reciprocate on the front surface (antifouling layer) of each film mirror ten times at a speed of 10 mm/sec under a condition where a load was 500 g/cm². Evaluation was conducted by measuring the number of scratches at that time.

Moreover, scratch resistance after each film mirror was left standing for six months under irradiation (UV irradiation) from a xenon lamp and under conditions where temperature was 75° and humidity was 85% RH was measured by a similar steel wool test. Evaluation was conducted by measuring the number of scratches at that time.

### [Contact Angle Test]

Based on JIS-R3257, 3 µL of water was dropped down on the front surface of each film mirror, and a contact angle of droplets concerned was measured by using a contact angle meter DM300 (Kyowa Interface Science Co., Ltd.).

### [Drop Angle Test]

A slide method kit DM-SA01 was attached onto a contact angle meter DM501 (Kyowa Interface Science Co., Ltd.), 50 µL of water was dropped down on the front surface of each film mirror, and a drop angle of droplets concerned was measured. In the case of a repellent film, the droplets are more likely to fall as the drop angle is being smaller, and this brings excellent antifouling performance, and is accordingly preferable.

### [Outdoor Exposure Field Test]

A film mirror sample of each of Comparative Examples 1 to 4 and Examples 1 to 8 was pasted onto an aluminum base material, whereby the reflecting device for solar thermal power generation was fabricated, and the reflecting device concerned was installed on the Sahara so that an angle thereof with the ground could become 40 degrees. Thereafter, in the case where the reflectance was lowered to a large extent by the dirt, the front surface was washed by ion exchange water. This operation was continued for one year and thereafter the regular reflectance was measured under the same conditions as above. Moreover, regular reflectance after the outermost surface of each film was washed by a predetermined brush and water was also measured in a similar way.

Table 1 shows evaluation results regarding the respective items.

[Table 1]

**Table.1**

| | INITIAL REGULAR REFLECTANCE | STEEL WOOL TEST; NUMBER OF SCRATCHES | | CONTACT ANGLE[°] | | DROP ANGLE[°] | | FIELD TEST | |
|---|---|---|---|---|---|---|---|---|---|
| | % | BEFORE XENON IRRADIATION | AFTER XENON IRRADIATION | BEFORE XENON IRRADIATION | AFTER XENON IRRADIATION | BEFORE XENON IRRADIATION | AFTER XENON IRRADIATION | REFLECTANCE AFTER OUTDOOR EXPOSURE [%] | REFLECTANCE AFTER WASHING AFTER OUTDOOR EXPOSURE[%] |
| COMPARATIVE EXAMPLE 1 | 94 | 0 | 60 OR MORE | 42 | 40 | 28 | 27 | 48 | 81 |
| COMPARATIVE EXAMPLE 2 | 93 | 0 | 60 OR MORE | 103 | 89 | 21 | 40 | 80 | 58 |
| COMPARATIVE EXAMPLE 3 | 93 | 0 | 60 OR MORE | 99 | 94 | 40 | 55 | 66 | 85 |
| COMPARATIVE EXAMPLE 4 | 95 | 15 | 40 | 7 | 25 | - | - | 88 | 60 |
| EXAMPLE 1 | 93 | 0 | 18 | 7 | 18 | - | - | 90 | 90 |
| EXAMPLE 2 | 94 | 0 | 0 | 6 | 7 | - | - | 93 | 92 |
| EXAMPLE 3 | 94 | 0 | 10 | 6 | 6 | - | - | 91 | 94 |
| EXAMPLE 4 | 95 | 0 | 8 | 8 | 7 | - | - | 90 | 93 |
| EXAMPLE 5 | 95 | 0 | 2 | 7 | 7 | - | - | 91 | 93 |
| EXAMPLE 6 | 95 | 0 | 0 | 7 | 7 | - | - | 94 | 95 |
| EXAMPLE 7 | 95 | 0 | 0 | 141 | 139 | 10 | 10 | 95 | 95 |
| EXAMPLE 8 | 95 | 0 | 0 | 143 | 140 | 9 | 10 | 95 | 95 |

As apparent from the evaluation results shown in Table 1, it is understood that a variety of characteristics of Examples 1 to 8 which specifically illustrate the film mirror according to the present invention are superior to those of Comparative Examples 1 to 4.

For example, in accordance with the results of the outdoor exposure field test, it is understood that, since the antifouling layer is not provided in each of Comparative Example 1 and Comparative Example 3, the dirt stuck to the front surface, and the reflectance was lowered to a large extent. Moreover, there occurred a situation where the dirt was less likely to be removed even if the film mirror was washed by water, and recovery of the reflectance was limited.

Moreover, in each of Comparative Example 2 and Comparative Example 4, the antifouling layer was provided and accordingly the reflectance was maintained to be relatively high; however, the antifouling layer No. 1 of Comparative Example 2 was prone to be deteriorated by ultraviolet rays and was scratched at the time when the front surface of the film was washed, and the reflectance thereof was lowered. Moreover, the hard coat layer is not provided in the film mirror of Comparative Example 4 and accordingly the film mirror was prone to be scratched at the time when the front surface of the film was washed, and the reflectance was lowered.

As opposed to this, with regard to Examples 1 to 8, though there were some differences thereamong in terms of the antifouling performance and the scratch resistance after the outdoor exposure field test, all thereof were able to maintain high reflectance thanks to the weatherability enhanced by the hard coat layer 7. It is believed that this is because the antifouling layer 8 formed by using the inorganic fine particles is less likely to be deteriorated, and can maintain high antifouling performance and scratch resistance for a long period.

That is to say, it is understood that the film mirror of the present invention includes the hard coat layer 7 and the antifouling layer 8, and can thereby reduce the deterioration of the reflecting layer 3 and prevent the regular reflectance from being lowered, and accordingly, is excellent in antifouling performance and the scratch resistance.

Hence, it is understood that, by using the film mirror according to the present invention, there can be provided the reflecting device for solar thermal power generation which is excellent in antifouling performance and scratch resistance, and in addition, is excellent in weatherability so that good regular reflectance can be kept with respect to the sunlight for a long period even if the reflecting device concerned is installed in a severe environment for a long period.

### INDUSTRIAL APPLICABILITY

The present invention is configured as described above, and accordingly, can be used as the film mirror and the reflecting device for solar thermal power generation.

### EXPLANATION OF SYMBOLS

- 1: resin base material (film base material)
- 2, 4: corrosion prevention layer
- 3: reflecting layer
- 5: ultraviolet absorption layer
- 6: gas barrier layer
- 7: hard coat layer
- 8: antifouling layer
- 10: reflecting film
- 11: metal base material (support base material)
- 12: sticky layer
- 20, 21: film mirror
- 30, 31: reflecting device for solar thermal power generation

## Claims

1. A film mirror (20, 30) in which a reflecting layer is provided on/over a base material (11), the film mirror comprising:
an antifouling layer (8) provided as an outermost layer on a light incident side of the film mirror, wherein
the antifouling layer comprises an inorganic fine particle layer comprising inorganic fine particles having different particle diameters, and a compound film that coats the inorganic fine particle layer, and
the compound film comprises one or more kinds of compounds selected from a group consisting of compounds represented by a following general formula (1) and compounds represented by a following general formula (2): 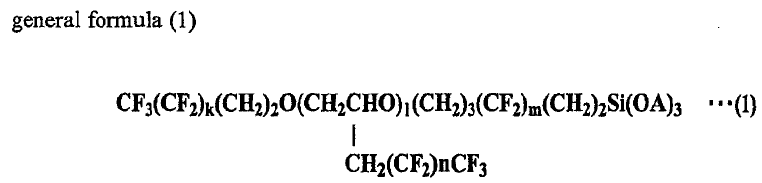
where A is an alkyl group, k is an integer of 10 to 50000, 1 is an integer of 1 to 1000, m is an integer of 1 to 1000, and n is an integer of 1 to 100, and 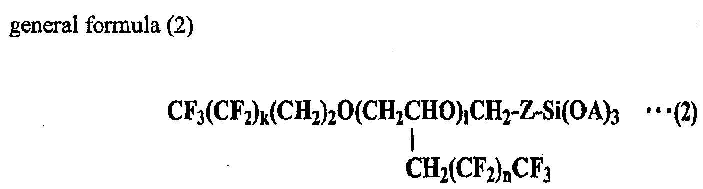
where A is an alkyl group, Z is a straight chain functional group which is (CH₂)ₘ, O(CH₂)ₘ or (CH₂)₂O(CH₂)ₘO(CH₂), k is an integer of 10 to 50000, 1 is an integer of 1 to 1000, m is an integer of 1 to 1000, and n is an integer of 1 to 100.

2. The film mirror of claim 1, comprising a hard coat layer provided on an opposite side of the light incident side of the antifouling layer.

3. The film mirror of claim 2, comprising:
an inorganic primer layer as a second layer from the light incident side, and
the hard coat layer as a third layer from the light incident side.

4. The film mirror of any one of claims 1 to 3, wherein the particle diameters of the inorganic fine particles contained in the antifouling layer range 0.5 nm or more to 100 nm or less.

5. The film mirror of any one of claims 1 to 4, wherein the inorganic primer layer comprises polysilazane.

6. The film mirror of any one of claims 1 to 5, wherein the hard coat layer comprises at least one of an ultraviolet absorber and an antioxidant.

7. The film mirror of any one of claims 1 to 6, further comprising a gas barrier layer provided between the antifouling layer and the reflecting layer.

8. The film mirror of any one of claims 1 to 7, further comprising an ultraviolet absorption layer provided between the antifouling layer and the reflecting layer.

9. The film mirror of any one of claims 1 to 8, further comprising a corrosion prevention layer provided on the light incident side of the reflecting layer.

10. A reflecting device for solar thermal power generation, wherein the reflecting device is formed by pasting the film mirror of any one of claims 1 to 9 onto a support base material.

## Patentansprüche

1. Filmspiegel (20, 30), wobei eine Reflexionsschicht auf/über einem Basismaterial (11) vorgesehen ist, wobei der Filmspiegel folgendes umfasst:
eine Antifoulingschicht (8), die als eine äußerste Schicht auf einer Lichteinfallsseite des Filmspiegels vorgesehen ist, wobei
die Antifoulingschicht eine anorganische Feinteilchenschicht mit verschiedenen Teilchendurchmessern und einen Verbundfilm, der die anorganische Feinteilchenschicht bedeckt, umfasst und
der Verbundfilm eine oder mehrere Arten von Verbindungen umfasst, ausgewählt aus einer Gruppe bestehend aus Verbindungen, die durch eine folgende allgemeine Formel (1) dargestellt sind, und Verbindungen, die durch eine folgende allgemeine Formel (2) dargestellt sind 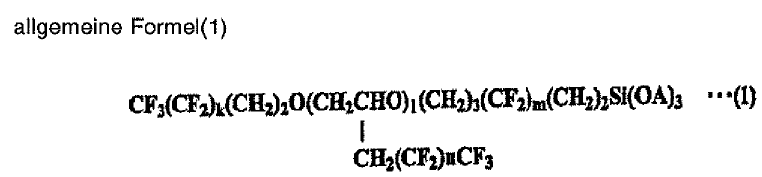
wobei A eine Alkylgruppe ist, k ein ganze Zahl von 10 bis 50000 ist, I ein ganze Zahl von 1 bis 1000 ist, m ein ganze Zahl von 1 bis 1000 ist und n eine ganze Zahl von 1 bis 100 ist, und 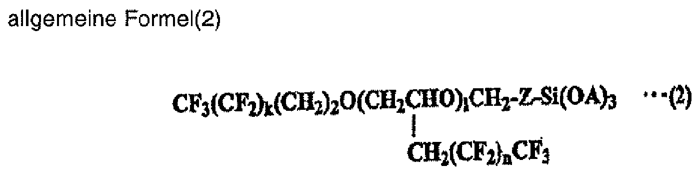
wobei A eine Alkylgruppe ist, Z eine geradkettige funktionelle Gruppe ist, die (CH₂)ₘ, O(CH₂)ₘ oder (CH₂)₂O(CH₂)ₘO(CH₂) ist, k eine ganze Zahl von 10 bis 50000 ist, I eine ganze Zahl von 1 bis 1000 ist, m eine ganze Zahl von 1 bis 1000 ist und n eine ganze Zahl von 1 bis 100 ist.

2. Filmspiegel nach Anspruch 1, umfassend eine Hartüberzugsschicht auf einer Seite gegenüber der Lichteinfallsseite der Antifoulingschicht.

3. Filmspiegel nach Anspruch 2, umfassend
eine anorganische Primerschicht als eine zweite Schicht der Lichteinfallsseite, und
die Hartüberzugsschicht als eine dritte Schicht der Lichteinfailsseite.

4. Filmspiegel nach einem der Ansprüche 1 bis 3 , wobei die Teilchendurchmesser der in der Antifoulingschicht enthaltenen anorganischen Feinteilchen von 0,5 nm oder mehr bis 100 nm oder weniger reichen.

5. Filmspiegel nach einem der Ansprüche 1 bis 4, wobei die anorganische Primerschicht Polysilazan umfasst.

6. Filmspiegel nach einem der Ansprüche 1 bis 5, wobei die Hartüberzugsschicht mindestens einen von einem UV-Absorber und einem Antioxidans umfasst.

7. Filmspiegel nach einem der Ansprüche 1 bis 6, weiterhin umfassend eine Gasbarriereschicht zwischen der Antifoulingschicht und der Reflexionsschicht.

8. Filmspiegel nach einem der Ansprüche 1 bis 7, weiterhin umfassend eine UV-Absorptionsschicht zwischen der Antifoulingschicht und der Reflexionsschicht.

9. Filmspiegel nach einem der Ansprüche 1 bis 8, weiterhin umfassend eine korrosionsverhindernde Schicht, die auf der Lichteinfallsseite der Reflexionsschicht vorgesehen ist.

10. Reflexionsvorrichtung zur Erzeugung von Solarwärme, wobei die Reflexionsvorrichtung durch Aufkleben des Filmspiegels nach einem der Ansprüche 1 bis 9 auf ein Basisträgermaterial ausgebildet ist.

## Revendications

1. Miroir à film (20, 30) dans lequel une couche réfléchissante est prévue sur/par-dessus un matériau de base (11), le miroir à fiilm comprenant :
une couche antisalissure (8) prévue en tant qu'une couche la plus en extérieur sur un côté de l'incidence de la lumière du miroir à film, dans lequel
la couche antisalissure comprend une couche de particules fines inorganiques ayant de différents diamètres de particules, et un film multicouche qui recouvre la couche de particules fines inorganiques, et
le film multicouche comprend une ou plusieurs espèces de composés sélectionnés parmi un groupe consistant en des composés représentés par une formule générale suivante (1) et des composés représentés par une formule générale suivante (2) 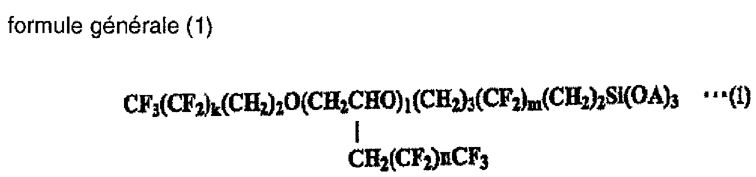
dans laquelle A est un groupe alkyle, k est un nombre entier de 10 à 50000, l est un nombre entier de 1 à 1000, m est un nombre entier de 1 à 1000 et n est un nombre entier de 1 à 100, et 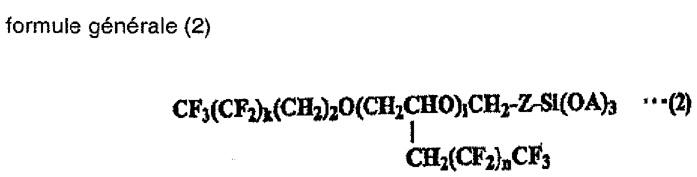
dans laquelle A est un groupe alkyle, Z est un groupe fonctionnel à chaîne étroite qui est (CH₂)ₘ, O(CH₂)ₘ ou (CH₂)₂O(CH₂)ₘO(CH₂), k est un nombre entier de 10 à 50000, I est un nombre entier de 1 à 1000, m est un nombre entier de 1 à 1000, et n est un nombre entier de 1 à 100.

2. Miroir à film selon la revendication 1, comprenant une couche de revêtement dure prévue sur un côté opposé du côté de l'incidence de la lumière de la couche antisalissure.

3. Miroir à film selon la revendication 2, comprenant
une couche primaire inorganique en tant qu'une deuxième couche du côté de l'incidence de la lumière, et
la couche de revêtement dure en tant qu'une troisième couche du côté de l'incidence de la lumière.

4. Miroir à film selon l'une des revendications 1 à 3, dans lequel les diamètres de particule des particules fines inorganiques contenues dans la couche antisalissure sont dans la gamme de 0,5 nm ou plus à 100 nm ou moins.

5. Miroir à film selon l'une des revendications 1 à 4, dans lequel la couche primaire inorganique comprend du polysilazane.

6. Miroir à film selon l'une des revendications 1 à 5, dans lequel la couche de revêtement dure comprend au moins l'un d'un absorbeur UV et un antioxydant.

7. Miroir à film selon l'une des revendications 1 à 6, comprenant en outre une couche barrière au gaz prévue entre la couche antisalissure et la couche réfléchissante.

8. Miroir à film selon l'une des revendications 1 à 7, comprenant en outre une couche d'absorption UV entre la couche antisalissure et la couche réfléchissante.

9. Miroir à film selon l'une des revendications 1 à 8, comprenant en outre une couche anticorrosion prévue sur le côté d'incidence de la lumière de la couche réfléchissante.

10. Dispositif réfléchissant pour la génération d'énergie thermique solaire, dans lequel le dispositif réfléchissant est formé par collage du miroir à film selon l'une des revendications 1 à 9 sur un matériau de base porteur.
